# FASCICULE DE BREVET EUROPEEN

(11) **EP 3 457 897 B1**
(45) Date de publication et mention de la délivrance du brevet: **24.02.2021**
(21) Numéro de dépôt: 17724077.7
(22) Date de dépôt: 19.05.2017
(51) Int. Cl.: A47J 27/09, A47J 27/08

(54) **APPAREIL DE CUISSON SOUS PRESSION À ERGONOMIE DE COMMANDE AMELIORÉE**
DRUCKGARGERÄT MIT VERBESSERTER STEUERUNGSERGONOMIE
PRESSURE COOKING APPLIANCE WITH IMPROVED CONTROL ERGONOMICS

(30) Priorité: 19.05.2016 EP 16170453
(43) Date de publication de la demande: 27.03.2019
(73) Titulaire: Lagostina S.p.A., 28887 Omegna (VB) (IT)
(72) Inventeur: MILANESI, Fausto, 28831 Baveno (VB) (IT); CAVICCHIOLO, Manuel, 28887 Omegna (VB) (IT); CHAMEROY, Eric, 21260 Veronnes (FR); BLANC, Hervé, Eugène, René, 21000 Dijon (FR)
(74) Mandataire: Weber, Jean-François
(86) Numéro de dépôt international: PCT/EP2017/062096
(87) Numéro de publication internationale: WO 2017/198815

(56) Documents cités:
- EP-A1- 1 938 717
- EP-A1- 1 938 718
- EP-A1- 2 204 111
- EP-A1- 2 732 734
- EP-A1- 2 732 736
- EP-A1- 3 245 914
- WO-A1-2012/045979

## Description

### DOMAINE TECHNIQUE

La présente invention se rapporte au domaine technique général des appareils de cuisson d'aliments sous pression, notamment de nature domestique, destinés à former une enceinte de cuisson hermétique au sein de laquelle sont cuits les aliments sous pression de vapeur.

La présente invention concerne plus particulièrement un appareil de cuisson sous pression à couvercle rentrant comprenant au moins :
- une cuve et un couvercle qui est conçu pour être rapporté dans la cuve avec une faculté de mobilité entre au moins d'une part une position de fermeture dans laquelle il forme avec la cuve une enceinte de cuisson capable de monter en pression, et d'autre part une position d'ouverture autorisant la communication de l'intérieur de l'enceinte avec l'extérieur,
- un organe de commande manuel du déplacement du couvercle, mobile entre au moins des première et deuxième positions correspondant respectivement aux positions de fermeture et d'ouverture du couvercle,
- un verrou mobile susceptible d'occuper une position de verrouillage empêchant le couvercle de gagner sa position d'ouverture, et une position de déverrouillage autorisant le couvercle à gagner sa position d'ouverture,
- et un moyen de sécurité à l'ouverture activable/désactivable automatiquement en réponse au niveau de pression dans l'enceinte, ledit moyen de sécurité à l'ouverture interdisant, lorsqu'il est activé, au verrou de gagner sa position de déverrouillage, et autorisant, lorsqu'il est désactivé, le verrou à quitter sa position de verrouillage.

### TECHNIQUE ANTERIEURE

Les appareils de cuisson sous pression, en particulier à usage domestique, du genre autocuiseur, sont bien connus dans l'art antérieur. De tels appareils comprennent généralement une cuve et un couvercle destiné à être rapporté sur la cuve pour former une enceinte de cuisson hermétiquement close au sein de laquelle sont placés les aliments à cuire.

L'intérieur de l'enceinte peut ainsi atteindre des pression et température élevées lorsque l'appareil est soumis à l'influence d'une source de chauffe.

Le document WO-2012/045979 A1 décrit un appareil de cuisson sous pression.

Il existe différents moyens pour réaliser un verrouillage hermétique réversible du couvercle sur la cuve.

On connaît en particulier des appareils de cuisson sous pression, habituellement désignés dans le domaine technique sous l'appellation « *autocuiseurs à couvercle rentrant* », mettant en œuvre un couvercle qui doit d'abord être inséré dans la cuve, sous un rebord supérieur rentrant de cette dernière, avant de venir par en-dessous en contact étanche avec ce rebord supérieur rentrant qui s'étend vers l'intérieur de la cuve et en surplombe le fond.

Il existe de surcroît différentes technologies d'autocuiseurs « *à couvercle rentrant ».* On connaît ainsi les autocuiseurs « *à trou d'homme* », qui mettent en œuvre d'une part une cuve dont le rebord supérieur rentrant délimite une ouverture ovale et d'autre part un couvercle de forme conjuguée ovale. Cette conjugaison de formes ovales permet d'introduire entièrement le couvercle à l'intérieur de la cuve, puis, une fois qu'il est positionné sous le rebord rentrant, de l'aligner avec l'ouverture de cuve pour qu'il vienne se plaquer de manière étanche contre ledit rebord rentrant. La conception de ces appareils « à *trou d'homme* » interdit bien entendu par nature l'utilisation de couvercles circulaires. Le document EP1938718A1 décrit un appareil de cuisson sous pression à couvercle rentrant.

Il existe toutefois également des autocuiseurs à couvercle rentrant permettant la mise en œuvre de couvercles circulaires. Ces appareils sont généralement connus sous l'appellation « *autocuiseurs* à *couvercle flexible* ». Ces appareils sont basés sur le principe de l'utilisation d'un couvercle capable de passer, sous l'effet d'une sollicitation mécanique en flexion, d'une configuration géométrique de repos permettant l'introduction du couvercle dans la cuve, à une configuration géométrique déformée permettant de réaliser la fermeture hermétique de la cuve.

On connaît ainsi un autocuiseur à couvercle flexible comprenant une cuve dont le rebord supérieur rentrant délimite une ouverture de cuve circulaire et un couvercle obtenu à partir d'un flan métallique circulaire roulé. Dans sa configuration de repos, le couvercle présente une forme de disque « *roulé* », c'est à dire cintré, qui lui permet d'être introduit au sein de la cuve sous le rebord rentrant. Dans sa configuration déformée le couvercle présente une forme de disque sensiblement plat, qui lui permet de venir en appui périphérique continu et uniforme contre la face interne du rebord rentrant, de façon à former une enceinte étanche. Cet appareil à couvercle flexible connu est également doté d'un levier pivotant destiné à commander le passage du couvercle de sa configuration de repos à sa configuration déformée, au moyen d'un système de transmission d'effort à chemin de came et biellette destiné à exercer un effort de traction sur le centre du couvercle pour rapprocher le couvercle de l'étrier. Afin de prévenir toute ouverture intempestive de cet appareil connu pendant le processus de cuisson sous pression, ce qui pourrait conduire à un échappement brutal du couvercle avec toutes les conséquences désastreuses qui pourraient s'ensuivre, cet appareil connu est équipé d'un doigt de sécurité à l'ouverture conçu pour bloquer le levier en position de fermeture lorsque la valeur de la pression interne atteint ou excède un seuil de sécurité.

Le doigt de sécurité en question est sensible à la pression et est capable d'occuper une position basse, sous l'effet de son propre poids, lorsque la pression interne est en deçà du seuil de sécurité, et une position haute atteinte sous l'effet de la force motrice exercée par la pression interne lorsque le seuil de sécurité est atteint ou dépassé. Le doigt de sécurité coopère avec un verrou monté à coulissement horizontal entre une position de verrouillage et une position de déverrouillage. Lorsque le doigt de sécurité est en position haute, il vient s'insérer dans un orifice ménagé dans le verrou pour bloquer ce dernier en position de verrouillage. Au contraire, en position basse, le doigt de sécurité autorise le verrou à se déplacer librement de sa position de verrouillage à sa position de déverrouillage. Le verrou est rappelé élastiquement en permanence dans sa position de verrouillage, et est pourvu d'un crochet conçu pour s'interverrouiller automatiquement avec le levier lorsque ce dernier atteint sa position de fermeture. Cet interverrouillage empêche ensuite le levier de quitter sa position de fermeture pour gagner sa position d'ouverture sous l'effet d'une sollicitation manuelle.

Afin d'ouvrir le couvercle, il est alors nécessaire, selon cette conception de l'art antérieur, d'exercer tout d'abord une poussée vers le bas sur le levier, pour dégager le crochet du levier, puis, tout en maintenant cette pression vers le bas sur le levier, d'exercer un effort manuel directement sur le crochet du verrou, à l'encontre du ressort de rappel du verrou, pour désengager complètement le levier du crochet, ce qui permet ensuite à l'utilisateur de faire pivoter vers le haut le levier jusqu'à sa position d'ouverture. Bien entendu, si le niveau de pression interne atteint ou excède le seuil de sécurité, le doigt de sécurité se trouve en position haute et bloque le verrou dans sa position de verrouillage, de sorte que l'utilisateur ne peut pas déplacer manuellement le crochet pour repousser le verrou vers sa position de déverrouillage.

Cette conception spécifique donne globalement satisfaction, notamment en matière de sécurité d'utilisation. En particulier, tout effort intempestif exercé sur le levier pour l'amener de sa position de verrouillage à sa position de déverrouillage, alors que la pression interne atteint ou excède le seuil de sécurité, est repris directement par le crochet du verrou, et non directement par le doigt de sécurité, évitant ainsi tout risque de casse ou détérioration de ce dernier qui est ainsi préservé de tout effort de cisaillement et d'arrachement important

Cet appareil connu n'en présente pas moins certains inconvénients découlant directement de sa conception sécuritaire spécifique décrite ci-avant.

Ces inconvénients résident en particulier dans la complexité de la gestuelle requise pour ouvrir le couvercle, et qui oblige l'utilisateur à mettre en œuvre deux rotations du levier selon deux sens et deux amplitudes différents, avec en parallèle une manipulation du crochet du verrou.

Une telle gestuelle d'ouverture s'avère, pour certains utilisateurs, peu intuitive, et difficile à mettre en œuvre.

Cette conception de l'art antérieur s'avère souffrir en outre d'un défaut de compacité, résultant en particulier du volume en saillie formé par le crochet. Il existe également un risque de détérioration accidentelle accru, en raison du fait que le crochet, du fait de son caractère saillant, s'avère particulièrement exposé au risque de casse.

### EXPOSE DE L'INVENTION

Les objets assignés à la présente invention visent en conséquence à remédier aux différents inconvénients énumérés précédemment et à proposer un nouvel appareil de cuisson sous pression à couvercle rentrant qui, tout en présentant un niveau de sécurité d'utilisation élevé, est particulièrement ergonomique et repose sur un fonctionnement très simple et intuitif.

Un autre objet de l'invention vise à proposer un nouvel appareil de cuisson sous pression à couvercle rentrant dont la conception autorise une gestuelle d'utilisation extrêmement simplifiée et naturelle.

Un autre objet de l'invention vise à proposer un nouvel appareil de cuisson sous pression à couvercle rentrant dont la conception permet d'éviter que des efforts mécaniques potentiellement importants puissent s'exercer sur des pièces de sécurité de l'appareil en cas d'erreur de manipulation de l'utilisateur.

Un autre objet de l'invention vise à proposer un nouvel appareil de cuisson sous pression à couvercle rentrant qui est de construction extrêmement compacte et légère, et dont la conception autorise le recours à des pièces de sécurité de dimensions et masse minimales.

Un autre objet de l'invention vise à proposer un nouvel appareil de cuisson sous pression à couvercle rentrant de construction particulièrement simple et bon marché.

Un autre objet de l'invention vise à proposer un nouvel appareil de cuisson sous pression à couvercle rentrant dont la fabrication se prête de façon optimale à l'industrialisation.

Un autre objet de l'invention vise à proposer un nouvel appareil de cuisson sous pression à couvercle rentrant particulièrement fiable et robuste.

Un autre objet de l'invention vise à proposer un nouvel appareil de cuisson sous pression à couvercle rentrant procurant un niveau de sécurité optimal pour son utilisateur.

Un autre objet de l'invention vise à proposer un nouvel appareil de cuisson sous pression à couvercle rentrant très léger, et reposant sur une cinématique de fonctionnement simplifiée.

Les objets assignés à l'invention sont atteints à l'aide d'un appareil de cuisson sous pression à couvercle rentrant comprenant au moins :
- une cuve et un couvercle qui est conçu pour être rapporté dans la cuve avec une faculté de mobilité entre au moins d'une part une position de fermeture dans laquelle il forme avec la cuve une enceinte de cuisson capable de monter en pression, et d'autre part une position d'ouverture autorisant la communication de l'intérieur de l'enceinte avec l'extérieur,
- un organe de commande manuel du déplacement du couvercle, mobile entre au moins des première et deuxième positions correspondant respectivement aux positions de fermeture et d'ouverture du couvercle,
- un verrou mobile susceptible d'occuper une position de verrouillage empêchant le couvercle de gagner sa position d'ouverture, et une position de déverrouillage autorisant le couvercle à gagner sa position d'ouverture,
- un moyen de sécurité à l'ouverture activable/désactivable automatiquement en réponse au niveau de pression dans l'enceinte, ledit moyen de sécurité à l'ouverture interdisant, lorsqu'il est activé, au verrou de gagner sa position de déverrouillage, et autorisant, lorsqu'il est désactivé, le verrou à quitter sa position de verrouillage,
caractérisé en ce que l'organe de commande manuel est lié au verrou par un dispositif de transmission conçu pour entraîner le verrou hors de sa position de verrouillage en réponse au déplacement de l'organe de commande manuel de sa première vers sa deuxième position alors que le moyen de sécurité à l'ouverture est désactivé.

### DESCRIPTIF SOMMAIRE DES DESSINS

D'autres objets et avantages particuliers de l'invention apparaîtront plus en détails à la lecture de la description qui suit, ainsi qu'à l'aide des dessins annexés, fournis à titre purement illustratif et non limitatif, parmi lesquels :
- La figure 1 illustre, selon une vue en perspective, un appareil de cuisson à couvercle flexible conforme à un premier mode de réalisation de l'invention, ledit appareil se trouvant dans une configuration déverrouillée, selon laquelle l'organe de commande manuel occupe sa deuxième position et le couvercle sa position d'ouverture.
- La figure 2 illustre, selon une vue schématique en perspective, un détail de réalisation de l'appareil de la figure 1, correspondant à un ensemble de couvercle incorporant le couvercle ainsi qu'un module d'accostage embarquant notamment l'organe de commande manuel.
- Les figures 3 à 5 illustrent, selon des vues schématiques en perspective, des détails de réalisation de l'appareil de cuisson des figures 1 et 2, dans sa configuration déverrouillée,
- La figure 6 illustre, selon une vue schématique en coupe, l'appareil de la figure 1 en configuration déverrouillée.
- La figure 7 illustre, selon une vue schématique en perspective, l'appareil de la figure 1 qui se trouve cette fois dans une configuration verrouillée selon laquelle l'organe de commande manuel occupe sa première position et le couvercle sa position de fermeture.
- La figure 8 illustre, selon une schématique en coupe, l'appareil de la figure 7.
- La figure 9 illustre, selon une vue schématique en perspective, un détail de réalisation de l'ensemble de couvercle de l'appareil des figures 7 et 8 dans sa configuration verrouillée.
- La figure 10 illustre, selon une vue schématique en coupe, l'appareil des figures 1 à 9 qui se trouve cette fois dans une configuration débrayée, selon laquelle le couvercle se trouve en position de fermeture tandis que l'organe de commande manuel se trouve en dehors de sa première position, et occupe en l'espèce sa deuxième position.
- La figure 11 illustre, selon une vue schématique en perspective, un appareil de cuisson sous pression à couvercle flexible conforme à un deuxième mode de réalisation de l'invention, ledit appareil se trouvant en l'espèce dans une configuration déverrouillée selon laquelle le couvercle est en position d'ouverture et l'organe de commande manuel occupe sa deuxième position.
- Les figures 12 et 13 illustrent, selon des vues schématiques en perspective, des détails de réalisation de l'ensemble de couvercle de l'appareil de la figure 11 en configuration déverrouillée.
- La figure 14 illustre, selon une vue schématique en coupe, l'appareil des figures 11 à 13 dans sa configuration déverrouillée.
- La figure 15 illustre, selon une vue schématique en coupe, l'appareil des figures 11 à 14 qui se trouve cette fois dans une configuration verrouillée, selon laquelle le couvercle occupe sa position de fermeture et l'organe de commande manuel sa première position.
- La figure 16 illustre, selon une vue schématique en coupe analogue à celle de la figure 15 mais selon un autre plan de coupe qui est parallèle à celui de la figure 15, l'appareil de la figure 15 dans sa configuration verrouillée.
- La figure 17 illustre, selon une vue générale en perspective, l'organe de commande manuel de l'appareil des figures 11 à 16.
- Les figures 18 et 19 illustrent, selon des vues schématiques en coupe selon deux plans de coupe respectifs distincts, l'organe de commande manuel de la figure 17.
- La figure 20 illustre, selon une vue schématique en coupe, l'appareil des figures 11 à 19 dans une configuration débrayée, selon laquelle le couvercle est en position de fermeture mais l'organe de commande manuel occupe sa deuxième position.
- La figure 21 illustre, selon une vue en coupe, un détail de réalisation d'un appareil de cuisson conforme à un troisième mode de réalisation de l'invention, ledit appareil se trouvant en l'espèce dans une configuration verrouillée selon laquelle le couvercle est en position de fermeture et l'organe de commande manuel occupe sa première position.
- La figure 22 illustre, selon une vue schématique en coupe, l'appareil de la figure 21 avec son organe de commande manuel dans une position intermédiaire entre la première position correspondant à la fermeture du couvercle et la deuxième position correspondant à l'ouverture du couvercle.
- La figure 23 illustre, selon une vue schématique en coupe, l'appareil des figures 21 et 22 dans une configuration déverrouillée selon laquelle le couvercle occupe sa position d'ouverture et l'organe de commande manuel occupe sa deuxième position.
- La figure 24 illustre, selon une vue schématique en perspective, l'ensemble de couvercle de l'appareil des figures 21 à 23 dans sa configuration verrouillée.
- La figure 25 illustre, selon une vue schématique en perspective, un mode de réalisation alternative de l'ensemble de la figure 24 mettant en œuvre un capot englobant le siège de la soupape de fonctionnement, contrairement au mode de réalisation de la figure 24 qui met en œuvre une soupape de fonctionnement montée de manière indépendante sur le couvercle.

### MEILLEURE MANIERE DE REALISER L'INVENTION

L'appareil de cuisson sous pression 1 conforme à l'invention est destiné à assurer la cuisson d'aliments, sous pression de vapeur. De façon préférentielle, l'appareil de cuisson sous pression 1 est constitué par un appareil domestique de cuisson sous pression, conçu pour une utilisation dans un contexte familial.

Conformément à l'invention, l'appareil 1 comprend au moins une cuve 2 qui forme un récipient de cuisson destiné à accueillir les aliments. La cuve 2 présente par exemple, comme illustré aux figures, une symétrie de révolution selon un axe X-X'. Dans ce qui suit, l'adjectif « *axial* » se réfère à la direction de cet axe de symétrie X-X', direction qui s'apparente à la direction verticale lorsque l'appareil 1 est en fonctionnement normal. Bien évidemment, la cuve 2 peut tout à fait ne pas affecter une forme de révolution (et être par exemple de forme ovale), sans pour autant que l'on sorte du cadre de l'invention.

La cuve 2 est avantageusement fabriquée à partir d'un matériau métallique (par exemple acier inoxydable ou aluminium), et comprend un fond 2A ainsi qu'une paroi latérale 2B qui s'élève à partir et à la périphérie du fond 2A. Un rebord rentrant 2C s'étend de façon centripète à partir de la paroi latérale 2B, préférentiellement à partir du sommet de cette dernière. De préférence, tel que cela est illustré aux figures, la paroi latérale 2B s'étend entre une extrémité inférieure reliée à la périphérie du fond 2A et une extrémité supérieure prolongée par le rebord rentrant 2C, lequel converge radialement vers le centre de la cuve 2, c'est à dire en direction de l'axe X-X'. Le rebord rentrant 2C présente une face interne située en regard de l'intérieur de la cuve 2, c'est à dire orientée vers le fond 2A. De préférence, le rebord rentrant 2C comprend un tronçon sensiblement tronconique 21C qui s'étend, par exemple selon une direction oblique vers le haut, dans le prolongement de la paroi latérale 2B, vers l'intérieur de la cuve 2, en surplomb de l'intérieur de la cuve 2 et de son fond 2A. Le tronçon tronconique 21C se termine lui-même avantageusement par un bord roulé 22C qui ménage un logement destiné à accueillir un joint d'étanchéité annulaire 4, lequel vient habiller la face interne du rebord rentrant 2C. Le rebord rentrant centripète 2C, qui fait donc saillie vers l'intérieur de la cuve 2, délimite ainsi une ouverture d'accès à l'intérieur de la cuve 2, par laquelle peuvent être introduits les aliments à cuire. Le diamètre de cette ouverture définie par le rebord rentrant 2C est sensiblement inférieur au diamètre de la paroi latérale 2B.

Conformément à l'invention, l'appareil de cuisson sous pression 1 comporte également au moins un couvercle 3 conçu pour être rapporté dans la cuve 2 pour former avec cette dernière une enceinte de cuisson. Plus précisément, l'appareil de cuisson 1 est un appareil de cuisson sous pression à couvercle rentrant. Cela signifie que pour former, à l'aide de la cuve 2 et du couvercle 3, une enceinte étanche de cuisson, il est nécessaire d'introduire tout d'abord entièrement le couvercle 3 à l'intérieur de la cuve 2, sous le bord libre supérieur (formé par le rebord rentrant 2C) de cette dernière, ledit bord libre délimitant l'ouverture d'accès à l'intérieur de la cuve 2, puis d'imprimer audit couvercle 3 un mouvement vertical de bas en haut pour que le couvercle 3 vienne en appui étanche contre et sous ledit bord libre supérieur (i.e. contre la face inférieure du bord rentrant 2C), pour obtenir une enceinte de cuisson hermétiquement close. Ce principe général sous-tendant la construction et le fonctionnement des appareils de cuisson sous pression à couvercle rentrant est bien connu en tant que tel.

Afin de maîtriser la pression de cuisson, l'appareil 1 comprend avantageusement un moyen de régulation de pression, comme par exemple une soupape de régulation 7. Ladite soupape de régulation de pression 7 est montée de préférence sur le couvercle 3, de façon par exemple à être portée directement par ledit couvercle 3 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, ou par exemple entre 50 et 55 kPa, ou entre 85 et 90 kPa, ou qui est par exemple de l'ordre de 65 kPa, ou de l'ordre de 100 kPa. L'appareil 1 de cuisson d'aliments sous pression comporte avantageusement d'autres organes de fonctionnement (par exemple un moyen de sécurité à l'ouverture 13 qui sera décrit plus en détails dans ce qui suit, une soupape de sécurité à la surpression 8, *etc*.).

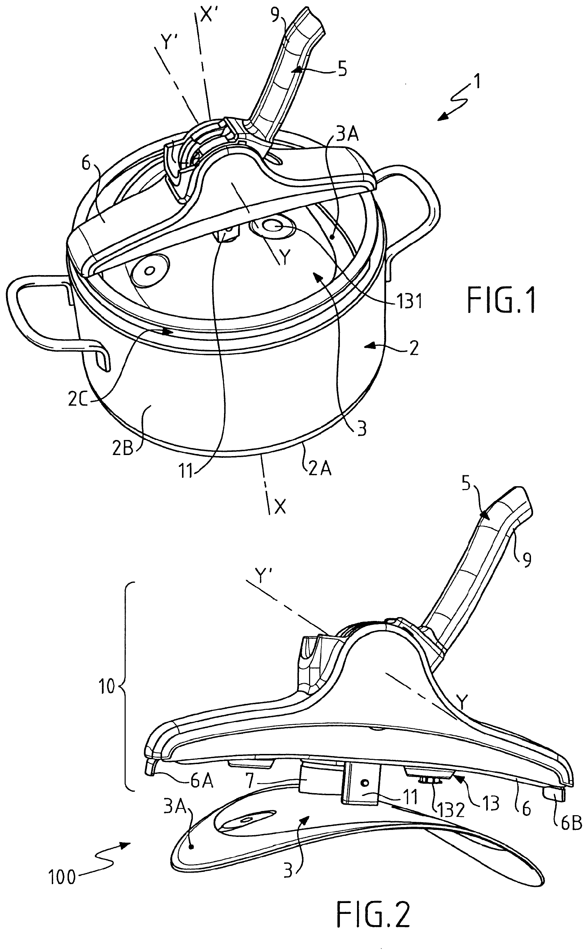

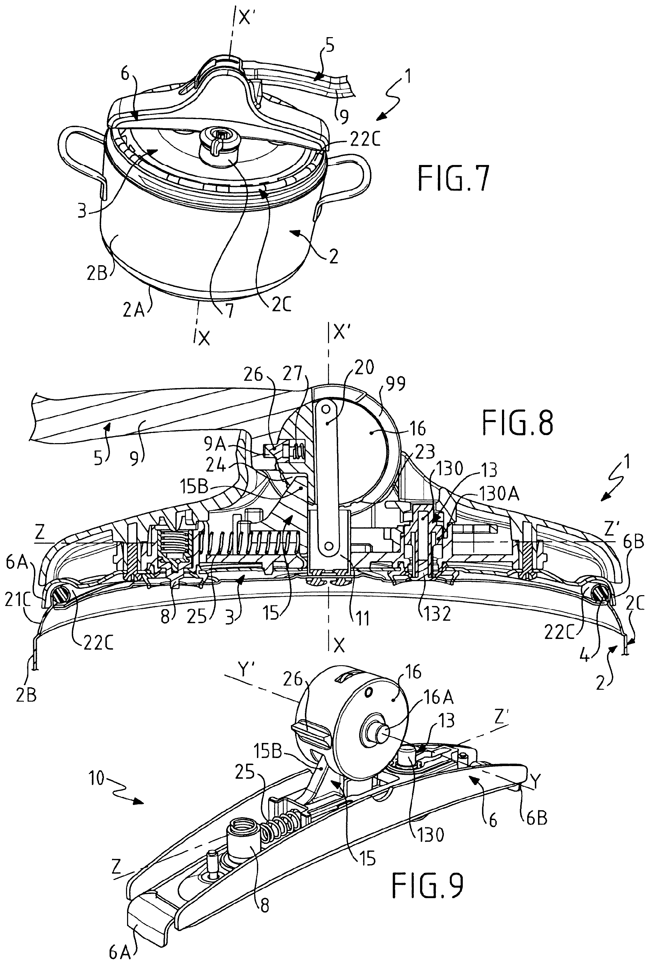

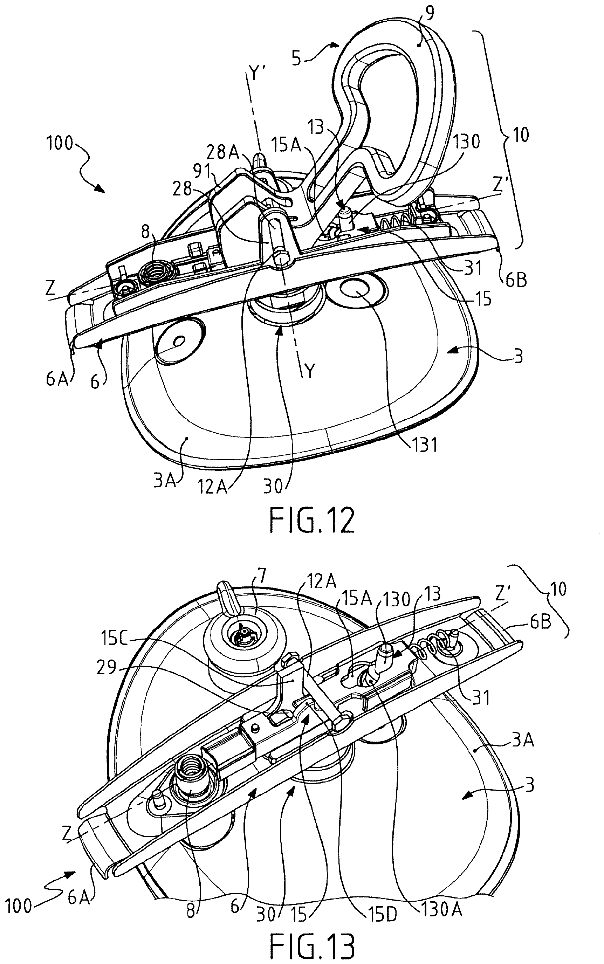

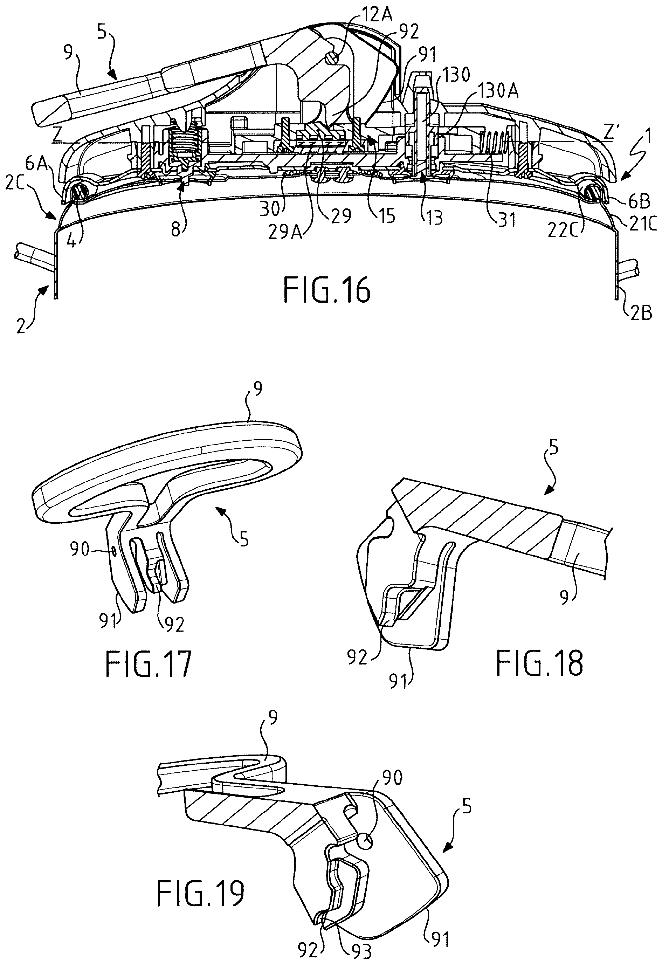

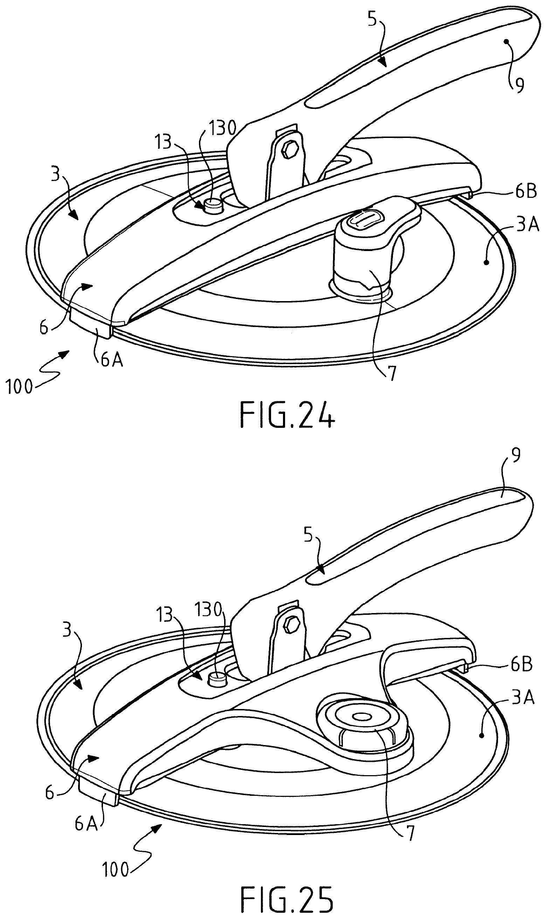

Conformément à l'invention, le couvercle 3 est conçu pour être rapporté dans la cuve 2 avec une faculté de mobilité entre au moins :
- d'une part une position de fermeture (illustrée aux figures 7 à 9, 15, 16, 21, 24 et 25) dans laquelle il forme avec la cuve 2 une enceinte de cuisson capable de monter en pression (et donc suffisamment étanche pour permettre une montée en pression en son sein),
- et d'autre part une position d'ouverture (illustrée aux figures 1 à 6, 11 à 14 et 23) autorisant la communication de l'intérieur de l'enceinte avec l'extérieur, de façon à ce que la pression régnant dans l'enceinte s'équilibre avec la pression atmosphérique.

En d'autres termes, conformément à l'invention, le couvercle 3 peut être rapporté dans la cuve 2, c'est à dire être inséré à l'intérieur de cette dernière, selon un positionnement prédéterminé, positionnement dans lequel il conserve une possibilité de se déplacer de façon contrôlée entre ses positions de fermeture et d'ouverture. Dans les modes de réalisation illustrés aux figures, le couvercle 3, lorsqu'il occupe sa position de fermeture, vient en contact sensiblement étanche, par la périphérie de sa face supérieure 3A, contre la face interne du rebord rentrant 2C, au contact du joint d'étanchéité 4. Au contraire, lorsque le couvercle 3 se trouve en position d'ouverture, il se trouve à distance du rebord rentrant 2C, ménageant ainsi un espace libre de mise en communication de l'intérieur de la cuve 2 avec l'extérieur qui empêche toute montée en pression significative de l'enceinte. Le passage de la position d'ouverture à la position de fermeture (et vice versa) s'effectue préférentiellement par un mouvement de translation verticale du couvercle 3 de bas en haut (respectivement de haut en bas).

Afin de rapporter le couvercle 3 dans la cuve 2, l'appareil 1 comprend avantageusement un sous-ensemble 10 relié mécaniquement au couvercle 3, ledit sous-ensemble 10 étant destiné à venir reposer en appui contre et sur la cuve 2 et formant ainsi un module d'accostage.

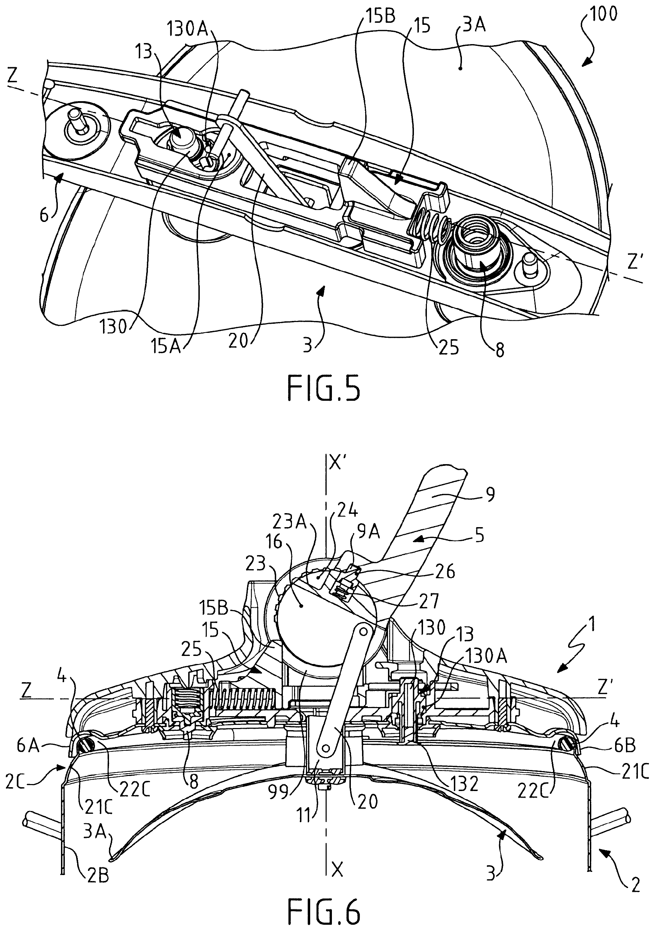

Le couvercle 3 est avantageusement monté mobile relativement au sous-ensemble 10 entre deux positions extrêmes qui, lorsque le sous-ensemble 10 repose de façon fixe et immobile contre le bord de cuve 22C (tel qu'illustré aux figures 1 et 6 par exemple), correspondent respectivement aux positions d'ouverture et de fermeture du couvercle 3. Au sens de l'invention, on considère donc que le couvercle 3 est rapporté dans la cuve 2 lorsqu'une pièce d'accostage (qui fait avantageusement partie du sous-ensemble 10) reliée au couvercle 3 vient s'immobiliser en appui contre la cuve 2, le couvercle 3 se trouvant alors prépositionné au sein de la cuve 2, sous le rebord rentrant 2C, avec une possibilité de se déplacer relativement à ladite pièce d'accostage et à la cuve 2. L'appareil 1 comprend avantageusement une traverse d'accostage 6, qui forme ladite pièce d'accostage et qui est destinée à ce titre à être rapportée sur, et à reposer librement contre, la cuve 2 (comme illustré aux figures). Le couvercle 3, le sous-ensemble 10 (incluant donc la traverse d'accostage 6) et les moyens de liaison mécanique entre eux forment un ensemble 100 unitaire et indépendant, appelé ici *« ensemble de couvercle* ». Selon les exemples de réalisation illustrés aux figures, la traverse d'accostage 6 est destinée à venir en appui périphérique contre et sur le rebord rentrant 2C, du côté de la face externe de ce dernier, de façon à être disposée en travers de l'ouverture de la cuve 2, pour venir en appui externe en deux régions diamétralement opposées du rebord rentrant 2C (cf. figures 1 et 7 par exemple). La traverse d'accostage 6 est avantageusement formée d'une plaque métallique allongée s'étendant longitudinalement entre deux extrémités opposées pourvues chacune d'un bord tombant respectif 6A, 6B permettant d'assurer un positionnement correct, autocentré, de la traverse d'accostage 6 sur la cuve 2. Au sens de l'invention, on considère que le couvercle 3 est rapporté dans la cuve 2 lorsque la traverse d'accostage 6 (ou tout autre moyen équivalent de l'ensemble de couvercle 100) repose sur et au-dessus de la cuve 2, en prenant appui sur le bord supérieur (formé ici par le rebord rentrant 2C) de la cuve 2 tel qu'illustré par exemple à la figure 1, le couvercle 3 étant avantageusement suspendu sous la traverse d'accostage 6.

Dans ce qui suit, on s'attachera exclusivement, pour des raisons de simplicité et de concision de description, à décrire un autocuiseur à couvercle flexible, c'est-à-dire un autocuiseur à couvercle rentrant pourvu d'un couvercle 3 déformable, dont la forme peut être modifiée par application d'une sollicitation mécanique commandée par l'utilisateur. L'invention n'est toutefois pas limitée à un type particulier d'autocuiseur à couvercle rentrant, et son enseignement s'applique également pleinement à d'autres types d'autocuiseurs à couvercle rentrant, et notamment aux autocuiseurs à trou d'homme.

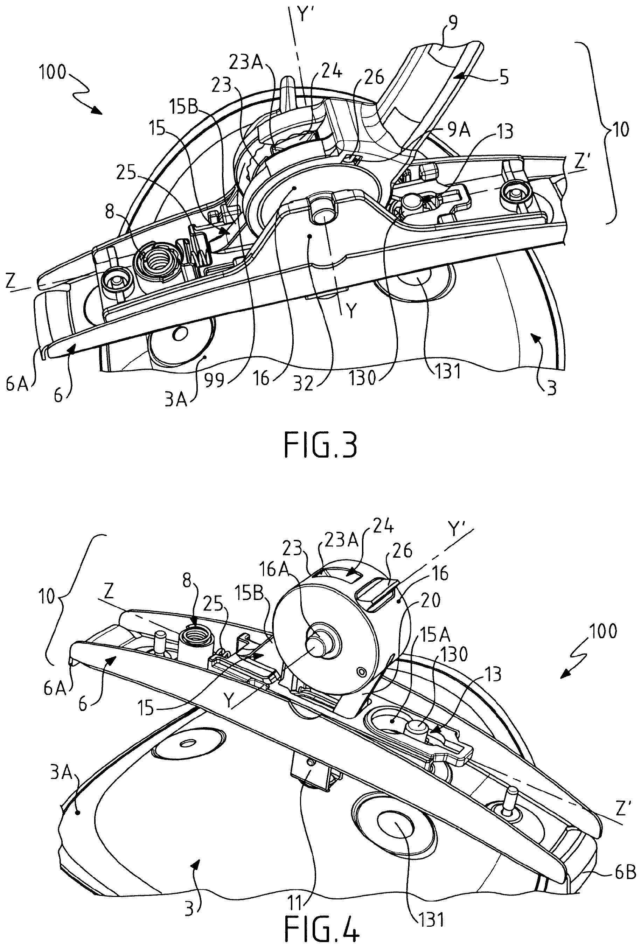

Conformément aux modes de réalisation illustrés aux figures, le couvercle 3 est donc avantageusement un couvercle déformable susceptible d'évoluer entre une configuration géométrique de repos (illustrée aux figures 1 à 6, 11 à 14 et 23) permettant l'introduction du couvercle 3 dans la cuve 2 sous la face interne du rebord rentrant 2C et une configuration géométrique déformée (représentée notamment à la figure 3) permettant au couvercle de venir en contact sensiblement étanche contre la face interne du rebord rentrant 2C, cette dernière étant préférentiellement habillée par le joint d'étanchéité 4. Afin de permettre à l'utilisateur d'ouvrir et fermer à volonté l'enceinte de cuisson, le couvercle 3 est préférentiellement un couvercle déformable de façon réversible. Cela signifie que le couvercle 3 est réalisé dans un matériau élastique et est sollicité en déformation à l'intérieur du domaine élastique dudit matériau. De façon préférentielle, le couvercle 3 est un couvercle flexible, c'est-à-dire qu'il est conçu pour changer de forme sous l'effet d'une sollicitation mécanique en flexion. Par exemple, tel que cela est bien connu en tant que tel dans l'art antérieur, le couvercle 3 est constitué d'un flan métallique discoïde qui a subi un roulage de telle sorte qu'il affecte au repos, en l'absence de sollicitation mécanique extérieure de déformation, une forme de selle, c'est à dire une forme courbe sensiblement en U (par exemple visible sur les figures 1, 6 et 14). En d'autres termes, le couvercle 3 présente avantageusement au repos (en l'absence de sollicitation de déformation) une forme de disque cintré, qui correspond en projection sur un plan horizontal à une ellipse. Grâce à cette forme gauche, ledit couvercle 3 peut être inséré à l'intérieur de la cuve 2 à travers l'orifice délimité par le rebord rentrant 2C, alors que le diamètre du flan discoïde (avant cintrage) à partir duquel est constitué le couvercle 3 est supérieur à celui de l'ouverture de cuve délimitée par le rebord rentrant 2C. La figure 1 représente notamment le couvercle 3 alors qu'il est inséré à l'intérieur de la cuve 2, sous le rebord rentrant 2C.

Conformément à l'invention, l'appareil de cuisson sous pression 1 comprend également un organe de commande manuel 5 du déplacement du couvercle 3, mobile entre au moins une première position (illustrée notamment aux figures 7, 15, 16, 21, 24 et 25) correspondant à la position de fermeture du couvercle 3 et une deuxième position (illustrée notamment aux figures 1 à 3, 12 et 23) correspondant, en usage normal, à la position d'ouverture du couvercle 3. Par exemple, dans les modes de réalisation illustrés aux figures, l'organe de commande manuel 5 du déplacement du couvercle 3 est conçu pour exercer un effort sensiblement vertical, selon l'axe X-X', ledit effort étant préférentiellement appliqué au centre du couvercle 3 et permettant de faire passer le couvercle 3 :
- de sa position d'ouverture à sa position de fermeture par traction verticale du bas vers le haut,
- et inversement, de sa position de fermeture à sa position d'ouverture par relâchement de l'effort de traction exercé, le couvercle 3 retournant en position de fermeture sous l'effet de son propre poids et/ou de l'action de rappel d'un ressort 30.

Dans le cas, illustré aux figures, d'un appareil 1 à couvercle flexible, l'organe de commande manuel 5 exerce une double fonction, savoir une fonction de commande du déplacement du couvercle 3 et une fonction de commande de la déformation (en flexion) du couvercle 3, ces fonctions intervenant successivement. En effet, sous l'effet de l'effort de traction verticale exercé par l'organe de commande 5 au niveau du centre du couvercle 3, le couvercle 3 va tout d'abord se déplacer globalement selon un trajet vertical parallèle à l'axe X-X' jusqu'à venir en butée, vers sa périphérie, contre le rebord rentrant 2C, lequel est habillé sur sa face interne par le joint annulaire d'étanchéité 4. L'effort de traction du bas vers le haut exercé par l'organe de commande manuel 5 est alors poursuivi tandis que le couvercle 3 est en appui contre le rebord rentrant 2C (par l'intermédiaire du joint d'étanchéité 4 interposé entre la face supérieure du couvercle 3 et la face inférieure du rebord rentrant 2C), ce qui occasionne alors une déformation élastique en flexion du couvercle 3. Cette déformation conduit le couvercle 3 à adopter une forme de disque sensiblement plat (et non plus cintré), forme lui permettant d'épouser de façon sensiblement uniforme et continue, sur sensiblement toute sa périphérie, le rebord rentrant 2C. On obtient ainsi une enceinte de cuisson suffisamment étanche pour permettre la cuisson des aliments à une pression significativement supérieure à la pression atmosphérique.

En d'autres termes, dans les modes de réalisation illustrés aux figures, l'organe de commande manuel 5 du déplacement du couvercle 3 commande non seulement le déplacement proprement dit du couvercle 3 mais également le passage dudit couvercle 3 de sa configuration géométrique de repos à sa configuration géométrique déformée et vice versa.

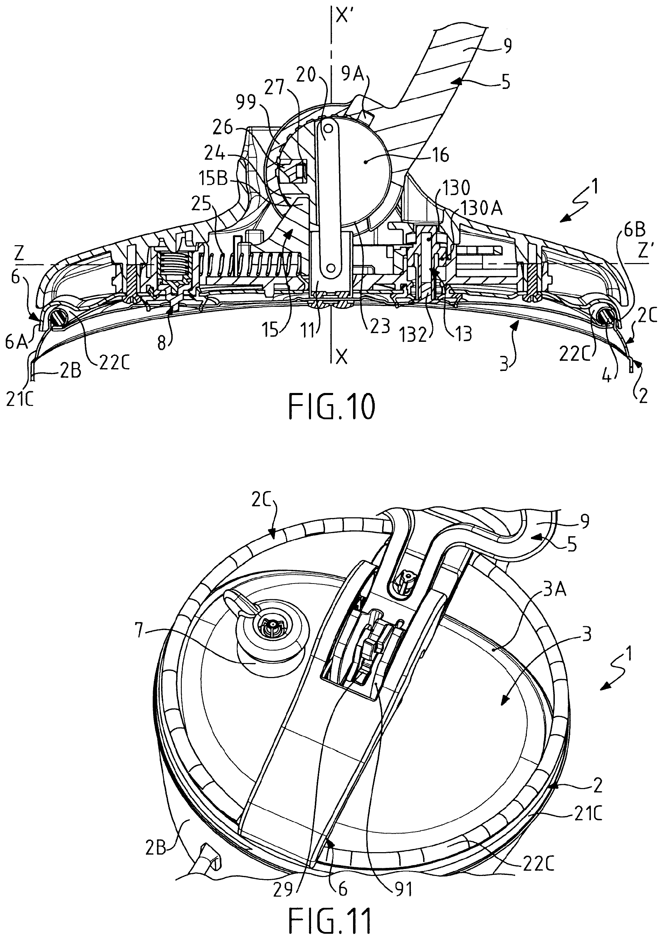

Avantageusement, l'organe de commande manuel 5 du déplacement du couvercle 3 est incorporé dans le sous-ensemble 10 et comprend préférentiellement un levier 9 mobile conçu pour être actionné manuellement par l'utilisateur. Le levier 9 est avantageusement monté mobile relativement à la traverse d'accostage 6 entre au moins d'une part une première position (illustrée aux figures 3 et 5) correspondant à la première position du moyen de commande 5 (fermeture), et d'autre part une deuxième position (illustrée aux figures 1, 2 et 4) correspondant à la deuxième position du moyen de commande 5 (ouverture). De préférence, le levier 9 est monté à pivotement relativement à la traverse d'accostage 6 selon un axe de rotation Y-Y' perpendiculaire à l'axe vertical X-X'. Le levier 9 est également de préférence relié, par l'intermédiaire d'un système de transmission d'efforts approprié, au couvercle 3, et préférentiellement au centre dudit couvercle 3, pour que le pivotement du levier 9 de sa deuxième vers sa première position entraîne l'exercice d'un effort de traction vers le haut sur le centre du couvercle 3 et réciproquement. Dans les modes de réalisation illustrés aux figures, le couvercle 3 est suspendu au levier 9, par l'intermédiaire dudit système de transmission d'efforts. Le système de transmission d'efforts comprend par exemple (comme illustré aux figures 1 à 10) une biellette 20 qui relie l'organe de commande manuel 5, et plus précisément le levier 9, au couvercle 3, en l'espèce par l'intermédiaire d'une pièce d'attache 11 en forme de U solidarisée au couvercle 3, par exemple par rivetage, et guidée à coulissement vertical à travers la traverse d'accostage 6, de façon à transformer le mouvement de rotation du levier 9 en mouvement de translation verticale de la pièce d'attache 11 et du couvercle 3 qui lui est attaché. L'invention n'est cependant absolument pas limitée à un organe de commande manuel 5 comprenant un levier 9 rotatif actionnant un système à biellette. Ainsi, dans le mode de réalisation des figures 11 à 20, le système de transmission d'efforts reliant le levier 9 au couvercle 3 repose sur la mise en œuvre d'une pièce rigide de transmission 12, par exemple en forme de U, dont une extrémité est attachée de façon fixe (liaison encastrement) au centre du couvercle 3, tandis que l'autre extrémité est attachée à pivotement au levier 9.

Alternativement, il est tout à fait envisageable que l'organe de commande manuel 5 comprenne non pas un levier, mais par exemple un volant relié à une roue dentée actionnant un système de transmission d'efforts à crémaillère. Il est bien évidemment également envisageable, sans pour autant que l'on sorte du cadre de l'invention, que l'organe de commande manuel 5 assure non pas une double fonction comme dans l'exemple illustré aux figures, mais seulement la fonction de déplacement (global) du couvercle 3, par exemple selon un mode de réalisation correspondant à un autocuiseur à trou d'homme dans lequel le couvercle ovale vient simplement se plaquer de manière étanche contre le rebord rentrant sans être ensuite déformé. Il est également envisageable, dans le cas cette fois d'un mode de réalisation à couvercle déformable, que l'organe de commande manuel 5 sollicite le couvercle 3 selon un autre mode de déformation que la flexion.

L'appareil de cuisson sous pression 1 conforme à l'invention comprend également un verrou mobile 15 susceptible d'occuper :
- une position de verrouillage empêchant le couvercle 3 de gagner sa position d'ouverture, et avantageusement empêchant le couvercle 3 de quitter sa position de fermeture,
- et une position de déverrouillage autorisant le couvercle 3 à gagner sa position d'ouverture, de préférence à partir de sa position de fermeture.

Avantageusement, le verrou mobile 15 coopère avec l'organe de commande manuel 5 de déplacement du couvercle 3 pour, en fonctionnement normal, que le verrou 15 inhibe, lorsqu'il se trouve en position de verrouillage, le déplacement de l'organe de commande manuel 5 afin de bloquer le couvercle 3 dans sa position de fermeture.

Dans ce mode de réalisation avantageux, le verrou 15 procure donc, en fonctionnement normal et dans sa position de verrouillage, un effet de blocage positif du moyen de commande 5 empêchant tout ouverture intempestive du couvercle 3.

Conformément à l'invention, l'appareil 1 comprend également un moyen de sécurité à l'ouverture 13 activable/désactivable automatiquement en réponse au niveau de pression dans l'enceinte. En d'autres termes, le moyen de sécurité à l'ouverture 13 peut passer automatiquement d'un état activé (dans lequel il assure une fonction de sécurité à l'ouverture) à un état désactivé en réponse au niveau de pression dans l'enceinte, selon par exemple que ce dernier atteint ou dépasse un niveau prédéterminé de sécurité (par exemple de l'ordre de 4 kPa au-dessus de la pression atmosphérique). Le moyen de sécurité à l'ouverture 13 interdit, lorsqu'il est activé, au verrou 15 de gagner sa position de déverrouillage, en particulier à partir de sa position de verrouillage, et de préférence interdit au verrou 15 de se déplacer hors de sa position de verrouillage en direction de sa position de déverrouillage. En revanche, le moyen de sécurité 13 autorise, lorsqu'il est désactivé, le verrou 15 à quitter sa position de verrouillage, en particulier pour rejoindre sa position de déverrouillage.

Avantageusement, le moyen de sécurité à l'ouverture 13 comprend un doigt de sécurité 130 sensible à la pression régnant à l'intérieur de l'enceinte, ledit doigt 130 étant distinct du verrou 15, et de préférence mobile relativement à ce dernier. Le doigt de sécurité 130 est mobile, notamment relativement au couvercle 3, de préférence selon un mouvement de translation verticale parallèle à l'axe vertical X-X', entre d'une part une position basse (correspondant à l'état désactivé) dans laquelle il est rappelé lorsque le niveau de pression dans l'enceinte est inférieur audit niveau prédéterminé de sécurité compatible avec la sécurité de l'utilisateur, et d'autre part une position haute (correspondant à l'état activé) qu'il occupe lorsque le niveau de pression dans l'enceinte atteint ou dépasse ledit niveau prédéterminé. En d'autres termes, le doigt de sécurité 130 est conçu pour se déplacer sous l'effet de l'action motrice exercée par la pression régnant dans l'enceinte formée par la réunion étanche de la cuve 2 et du couvercle 3.

Ainsi, lorsque l'appareil 1 se trouve dans une configuration déverrouillée, avec son couvercle 3 en position de fermeture et son verrou 15 en position de verrouillage, le moyen de sécurité à l'ouverture 13 vient bloquer le verrou 15 dans sa position de verrouillage dès que la pression interne atteint ou excède le niveau de sécurité prédéterminé, empêchant ainsi le couvercle 3 de quitter sa position de fermeture, puisqu'il est lui-même bloqué dans cette position par le verrou 15. De préférence, le verrou 15 est monté sensiblement à translation horizontale relativement au couvercle 3, et de préférence relativement à la traverse d'accostage 6, entre ses positions de verrouillage et de déverrouillage, avantageusement selon un axe Z-Z' qui est perpendiculaire à la fois à l'axe vertical X-X' et à l'axe de pivotement Y-Y' du levier 9.

De préférence, le verrou 15 est solidaire d'un logement 15A (qui est avantageusement embarqué sur le verrou 15), ledit logement 15A étant formé par exemple par une lumière qui, lorsque le verrou 15 occupe sa position de verrouillage, se trouve au droit du doigt de sécurité 130, en alignement avec ce dernier, afin de permettre à une conformation de verrouillage 130A porté par le doigt 130, de pénétrer dans le logement 15A pour réaliser ainsi un interverrouillage des doigt de sécurité 130 et verrou 15. De préférence, la conformation de verrouillage 130A porté par le doigt de sécurité 130 est formée par une portion de section élargie dudit doigt de sécurité 130, dont le diamètre est avantageusement légèrement inférieur à celui du diamètre de la lumière formant le logement 15A complémentaire associé au verrou mobile 15, de façon à réaliser un emboîtement ajusté de ladite conformation de verrouillage 130A dans le logement 15A, pour empêcher tout mouvement relatif du verrou 15 relativement au doigt de sécurité 130 lorsque ce dernier occupe sa position haute.

De façon préférentielle, le doigt de sécurité 130 coopère avec un orifice 131 ménagé à travers le couvercle 3 pour que ledit orifice 131 soit obturé par le doigt 130, par exemple au moyen d'une garniture d'étanchéité 132 portée par ce dernier, lorsque le doigt 130 se trouve en position haute. Au contraire, en position basse, le doigt 130 dégage l'ouverture 131 mettant ainsi en communication l'intérieur de l'enceinte avec l'extérieur. Avantageusement, le verrou 15 coopère avec le moyen de sécurité à l'ouverture 13 pour que le verrou 15, lorsqu'il est en position de déverrouillage, empêche le moyen de sécurité à l'ouverture 13 de passer de son état désactivé à son état activé. De cette façon, le moyen de sécurité à l'ouverture 13 assure donc, outre sa fonction de sécurité à l'ouverture, une fonction de sécurité à la mauvaise fermeture. Par exemple, dans les modes de réalisation illustrés aux figures, l'enceinte de cuisson est incapable de monter en pression au-delà du niveau de sécurité prédéterminé tant que le doigt de sécurité 130 n'a pas rejoint sa position haute, position haute qu'il est empêché de rejoindre par le verrou 15 tant que ce dernier se trouve en dehors de sa position de verrouillage, et occupe par exemple sa position de déverrouillage.

Conformément à l'invention, l'organe de commande manuel 5 est lié au verrou 15 par un dispositif de transmission conçu pour entraîner le verrou 15 hors de sa position de verrouillage en réponse au déplacement de l'organe de commande manuel 5 de sa première vers sa deuxième position alors que le moyen de sécurité à l'ouverture 13 est désactivé. Cela signifie que le déplacement de l'organe de commande manuel 5 de sa première vers sa deuxième position commande, par l'intermédiaire dudit dispositif de transmission, le déplacement du verrou 15 hors de sa position de verrouillage, pour permettre ainsi à l'organe de commande manuel 5 de gagner sa deuxième position. Le dispositif de transmission est conçu pour entraîner automatiquement, sans intervention aucune de l'utilisateur, le verrou 15 hors de sa position de verrouillage en réponse uniquement au déplacement de l'organe de commande manuel 5 de sa première vers sa deuxième position. Grâce à cette mesure technique, la gestuelle d'ouverture est extrêmement simplifiée en comparaison avec l'art antérieur, puisque l'utilisateur n'a en particulier plus besoin de manipuler à la fois l'organe de commande manuel 5 et un crochet de verrouillage distinct. Il suffit au contraire désormais à l'utilisateur d'entraîner manuellement l'organe de commande manuel 5 de sa première vers sa deuxième position pour automatiquement repousser le verrou 15 hors de sa position de verrouillage, permettant ainsi à l'organe de commande manuel 5 de gagner sa deuxième position. Bien entendu, l'invention n'est pas limitée à un dispositif de transmission spécifique, et tout dispositif de transformation de mouvement approprié peut être mis en oeuvre pour former le dispositif de transmission reliant l'organe de commande manuel 5 au verrou 15. Dans les modes de réalisation illustrés aux figures, le dispositif de transmission est avantageusement conçu pour transformer le mouvement de rotation du levier 9 selon l'axe Y-Y' en mouvement de translation horizontale du verrou 15 selon l'axe Z-Z'. Par exemple, le dispositif de transmission peut mettre en œuvre un système à came, biellette, engrenage, crémaillère... ou tout autre dispositif mécanique de transformation de mouvement approprié.

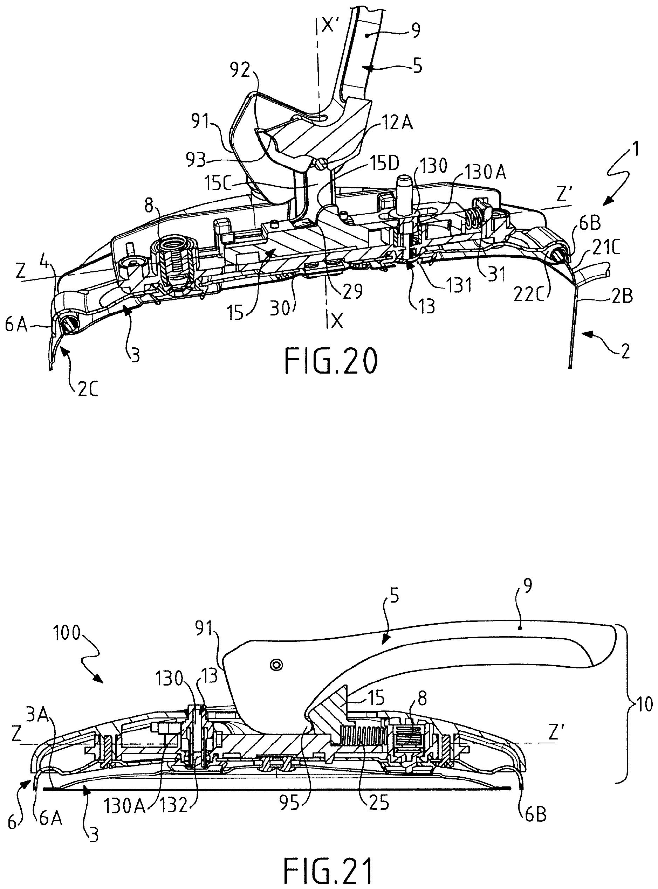

De façon préférentielle, conformément aux premier et deuxième modes de réalisation respectivement illustrés aux figures 1 à 10 et 11 à 20, le dispositif de transmission assurant la liaison mécanique fonctionnelle entre l'organe de commande manuel 5 et le verrou 15 est débrayable, pour autoriser le déplacement de l'organe de commande manuel 5 de sa première vers sa deuxième position lorsque le verrou 15 est en position de verrouillage et que le moyen de sécurité à l'ouverture 13 est activé. Le recours à un dispositif de transmission débrayable évite avantageusement de soumettre les pièces de sécurité et de commande, comme par exemple le moyen de sécurité à l'ouverture 13, les pièces formant le dispositif de transmission, le verrou 15 et l'organe de commande manuel 5 lui-même, à des efforts potentiellement importants qui pourraient les détériorer. Le recours à un dispositif de transmission débrayable n'est toutefois pas obligatoire, et l'invention peut tout à fait mettre en oeuvre, même si cela est bien entendu moins avantageux, un dispositif de transmission qui n'est pas débrayable, comme c'est le cas dans la troisième variante des figures 21 à 25.

Les deux premiers modes de réalisation des figures 1 à 20 vont maintenant être décrits plus en détail dans ce qui suit.

Conformément au premier mode de réalisation des figures 1 à 10, le dispositif de transmission reliant l'organe de commande manuel 5 au verrou 15 comprend au moins une pièce de liaison 16 mobile relativement au verrou 15, par l'intermédiaire au moins de laquelle le couvercle 3 est relié à l'organe de commande manuel 5. La pièce de liaison 16 est par exemple reliée, dans le premier mode de réalisation des figures 1 à 10, au couvercle 3 par l'intermédiaire de fa biellette 20 dont une extrémité est liée à pivotement à la pièce de liaison 16 tandis que l'autre extrémité est liée à pivotement à la pièce 11 en U attachée au centre du couvercle 3. Dans le mode de réalisation des figures 1 à 10, la pièce de liaison 16 est avantageusement formée par un moyeu monté à rotation selon l'axe Y-Y' relativement à la traverse d'accostage 6. La traverse d'accostage 6 embarque ainsi avantageusement une platine 32, le moyeu formant pièce de liaison étant monté à rotation relativement à la platine 32 (figure 3). Le moyeu 16 est par exemple avantageusement pourvu d'au moins un tourillon 16A qui tourne dans un logement ou palier porté par la platine 32 solidaire de la traverse d'accostage 6. Le moyeu formant pièce de liaison 16 présente avantageusement une forme sensiblement circulaire, l'extrémité supérieure de la biellette 20 étant attachée à pivotement au voisinage de la périphérie du moyeu, de façon excentrée relativement à l'axe de rotation Y-Y' dudit moyeu.

Dans ce premier mode de réalisation des figures 1 à 10, l'organe de commande manuel 5 est monté avec une faculté de mobilité relativement à la pièce de liaison 16, qui est de préférence une faculté de rotation relativement à la pièce de liaison 16 selon le même axe de rotation Y-Y' que cette dernière. Cette faculté de mobilité est avantageusement inhibée tant que le dispositif de transmission n'est pas débrayé, de sorte que l'organe de commande manuel 5 ne peut pas se déplacer relativement à la pièce de liaison 16, et entraîne cette dernière en déplacement. Au contraire, lorsque le dispositif de transmission est débrayé, ladite faculté de mobilité est désinhibée, autorisant ainsi l'organe de commande manuel 5 à se déplacer relativement à la pièce de liaison 16, indépendamment de cette dernière. Comme cela ressortira plus en détails de la description qui suit, l'état débrayé du dispositif de transmission correspond à l'état désinhibé de la faculté de mobilité entre l'organe de commande manuel 5 et la pièce de liaison 16, tandis que l'état embrayé du dispositif de transmission correspond à l'inhibition de la faculté de mobilité entre l'organe de commande manuel 5 et la pièce de liaison 16. Avantageusement, la faculté de mobilité de l'organe de commande manuel 5 relativement à la pièce de liaison 6 est présente (c'est-à-dire désinhibée) uniquement lorsque le moyen de sécurité à l'ouverture 13 est activé (doigt de sécurité 130 en position haute d'interverrouillage avec le verrou 15 dans sa position de verrouillage). Ainsi, lorsque la faculté de mobilité entre l'organe de commande manuel 5 et la pièce de liaison 16 est désinhibée, l'organe de commande manuel 5 peut tourner autour de la pièce de liaison 16 selon l'axe Y-Y', la pièce de liaison 16 étant elle-même capable de tourner selon le même axe Y-Y' relativement à la traverse d'accostage 6 et au support 17 porté par cette dernière. Au contraire, lorsque la faculté de mobilité entre l'organe de commande manuel 5 et la pièce de liaison 16 est inhibée, l'organe de commande manuel 5 et la pièce de liaison 16 sont reliés ensemble de telle sorte qu'ils tournent ensemble relativement à l'axe Y-Y', l'organe de commande manuel 5 étant dans ce cas conçu pour que son déplacement entraine le déplacement concomitant de la pièce de liaison 16.

Avantageusement, comme illustré, le verrou 15 retient, en position de verrouillage, la pièce de liaison 16 dans une position de cette dernière correspondant à la position de fermeture du couvercle 3. Le verrou 15 est ainsi conçu, dans le mode de réalisation des figures 1 à 10, pour exercer une action de blocage uniquement sur la pièce de liaison 16. Cela signifie notamment que le verrou 15 n'interdit pas à l'organe de commande manuel 5 de se déplacer, et en particulier de se déplacer relativement à la pièce de liaison 16. L'organe de commande manuel 5 est donc libre de se déplacer relativement à la pièce de liaison 16 lorsque sa faculté de mobilité relativement à la pièce de liaison 16 est désinhibée, et ce même lorsque le verrou 15 est en position de verrouillage et retient la pièce de liaison 16 dans une position (illustrée à la figure 8), dans laquelle le couvercle 3 est en position de fermeture.

Avantageusement, la pièce de liaison 16 commande quant à elle le déplacement du couvercle 3 entre ses positions d'ouverture et de fermeture, au moyen de tout dispositif de liaison mécanique approprié. Par exemple, conformément au mode de réalisation des figures 1 à 10, l'appareil 1 comprend une biellette 20 qui relie la pièce de liaison 16 au couvercle 3 pour transformer le déplacement de la pièce de liaison 16 en déplacement du couvercle 3. Le couvercle 3 est ainsi suspendu, par l'intermédiaire de la pièce 11 et de la biellette 20, à la pièce de liaison 16, laquelle est embarquée dans le module 10 et est montée à rotation relativement à la traverse d'accostage 6.

Avantageusement, la pièce de liaison 16 est pourvue d'une came d'entraînement 23 coopérant avec le verrou 15 pour entraîner ce dernier hors de sa position de verrouillage en réponse au déplacement de l'organe de commande manuel 5 de sa première vers sa deuxième position alors que le moyen de sécurité à l'ouverture 13 est désactivé.

Avantageusement, le verrou 15 est pourvu d'un cliquet 15B, tandis que la came d'entraînement 23 est pourvue d'une conformation de blocage 24 avec laquelle le cliquet 15B est destiné à coopérer en interverrouillage lorsque l'organe de commande manuel 5 atteint sa première position, afin de retenir la pièce de liaison 16 dans sa position correspondant à la position de fermeture du couvercle 3. Lorsque l'organe de commande manuel 5 est actionné manuellement de sa première vers sa deuxième position, il entraîne avec lui, si le moyen de sécurité à l'ouverture 13 est désactivé, la pièce de liaison 16, laquelle repousse alors, au moyen de la came d'entraînement 23 qu'elle porte et dont fait partie la conformation de blocage 24, le cliquet 15B, déplaçant ainsi le verrou 15 hors de sa position de verrouillage et autorisant l'organe de commande manuel 5 à poursuivre sa course jusque dans sa deuxième position.

Avantageusement, et conformément au mode de réalisation des figures 1 à 10, l'appareil 1 comprend un organe de rappel élastique, formé par exemple par un ressort 25, qui tend en permanence à rappeler le verrou 15 dans sa position de verrouillage. Le verrou 15 est donc soumis de façon permanente à une force de rappel exercée par le ressort 25, de sorte que le cliquet 15B est pressé en permanence contre la came d'entraînement 23 dont est pourvue la pièce de liaison 16, le cliquet 15B suivant ainsi en permanence la came d'entraînement 23.

Avantageusement, l'organe de commande manuel 5 coopère avec le verrou 15, de préférence par l'intermédiaire de la pièce de liaison 16, et plus précisément de la came d'entraînement 23 dont est pourvue cette dernière, pour maintenir le verrou 15 en dehors de sa position de verrouillage tant que l'organe de commande manuel 5 n'a pas atteint sa première position.

Dans le mode de réalisation des figures 1 à 10, la came d'entraînement 23 est formée par la surface périphérique externe du moyeu formant pièce de liaison 16, la conformation de blocage 24 étant formée par une cavité délimitée par au moins un pan 23A qui forme une butée pour le cliquet 15B lorsque ce dernier vient se loger dans la cavité en question pour bloquer en position la pièce de liaison 16.

Avantageusement, afin de conférer au dispositif de transmission un caractère débrayable, ledit dispositif de transmission comprend un premier élément d'accouplement relié, directement ou indirectement, à l'organe de commande manuel 5, et un deuxième élément d'accouplement relié, directement ou indirectement, au verrou 15. Conformément aux premier et deuxième modes de réalisation illustrés aux figures, l'un au moins desdits premier et deuxième éléments d'accouplement évolue entre une configuration active permettant un interengagement desdits premier et deuxième organes d'accouplement pour accoupler mécaniquement lesdits organe de commande manuel 5 et verrou 15, et une configuration inactive empêchant l'interengagement desdits premier et deuxième éléments pour désaccoupler mécaniquement lesdits organe de commande manuel 5 et verrou 15. La configuration active correspond donc à un état dans lequel le dispositif de transmission n'est pas débrayé, tandis que la configuration inactive correspond au contraire à un état débrayé du dispositif de transmission, dans lequel les efforts impartis manuellement à l'organe de commande manuel 5 ne sont pas communiqués au verrou 15. Dans le premier mode de réalisation illustré aux figures, le premier élément d'accouplement est formé par une gâche 9A portée par l'organe de commande manuel 5 tandis que le deuxième élément d'accouplement est lui formé par un pêne 26 porté par la pièce de liaison 16 et monté mobile relativement à cette dernière entre :
- une position déployée de rappel élastique correspondant à la configuration active, dans laquelle le pêne 26 fait par exemple saillie de la surface périphérique de la pièce de liaison 16 et peut ainsi s'insérer dans la gâche 9A pour inhiber la faculté de déplacement de l'organe de commande manuel 5 relativement à la pièce de liaison 16,
- et une position rétractée (visible sur la figure 10) correspondant à la configuration inactive, dans laquelle le pêne 26 s'efface par exemple dans la pièce de liaison 16, de sorte que l'organe de commande manuel 5 peut se déplacer relativement à la pièce de liaison 16.

Le fonctionnement de l'appareil de cuisson sous pression 1 à couvercle flexible conforme au premier mode de réalisation des figures 1 à 10 est le suivant. L'utilisateur saisit tout d'abord l'ensemble de couvercle 100 par le levier 9, qui affecte une forme de manche, et vient déposer la traverse d'accostage 6 sur le bord supérieur libre de la cuve 2, de façon à obtenir la configuration illustrée figure 1 dans laquelle le couvercle 3 est suspendu dans la cuve 2 au module d'accostage 10. L'appareil 1 se trouve alors en configuration déverrouillée. Dans cette configuration, illustrée figure 6, le cliquet 15B est plaqué élastiquement contre la paroi latérale périphérique du moyeu formant pièce de liaison 16, tandis que le pêne 26 est inséré dans la gâche 9A. L'utilisateur exerce alors un effort manuel de fermeture sur le levier 9, dans un sens antihoraire relativement à la représentation de la figure 6. Le levier 9 entraîne ainsi en rotation, selon l'axe Y-Y', la pièce de liaison 16 (grâce à l'engagement de la gâche 9A par le pêne 26). La pièce de liaison 16 entraîne elle-même la biellette 20, qui en retour exerce un effort de traction verticale ascendante sur le centre du couvercle 3 auquel elle est connectée à son extrémité inférieure, par l'intermédiaire de la pièce 11. Pendant cette course angulaire de fermeture, le cliquet 15B suit la paroi latérale périphérique de la pièce de liaison 16, contre laquelle il est rappelé élastiquement sous l'effet de la force exercée par le ressort de rappel 25. Une fois le levier 9 parvenu dans sa première position, le cliquet 15B pénètre dans la cavité 24 et vient se plaquer contre le pan 23A de la cavité 24, comme illustré figure 8. L'appareil de cuisson sous pression 1 se trouve alors dans une configuration verrouillée, dans laquelle le couvercle 3 est plaqué périphériquement contre et sous le rebord rentrant 2C de la cuve 2. L'appareil 1 est alors prêt à monter en pression sous l'effet d'une source de chauffe externe (plaque de cuisson par exemple) ou embarquée. Lorsque la pression régnant dans l'enceinte atteint le niveau de sécurité prédéterminé sous l'effet du chauffage auquel elle est soumis, le doigt de sécurité 130 passe de sa position basse à sa position haute (illustrée aux figures 8 et 9). Le doigt de sécurité 130 est alors maintenu, par la pression interne, dans sa position haute, avec sa conformation de verrouillage 130A inséré de manière ajustée dans le logement complémentaire 15A du verrou 15. Ce dernier est donc bloqué dans sa position de verrouillage par le doigt de sécurité 130, et son cliquet 15B bloque lui-même en position la pièce de liaison 16 et le levier 9 qui lui est accouplé par le système pêne 26/gâche 9A. Dans l'hypothèse où un utilisateur viendrait à exercer à ce moment un effort manuel sur le levier 9 pour tenter, volontairement ou non, d'ouvrir le couvercle, il est tout d'abord empêché par le verrou 15 de déplacer dans un sens horaire (en référence à la figure 8) la pièce de liaison 16 et donc le levier 9 auquel la pièce de liaison 16 est accouplée. Si l'utilisateur exerce un effort conséquent, il repoussera alors, par effet de came, le pêne 26 (qui affecte avantageusement une forme de rampe) au sein d'un logement ménagé à la surface de la pièce de liaison 16, à l'encontre de l'effort de rappel exercé par un ressort 27. La pièce de liaison 16 et le levier 9 sont alors désaccouplés, ce qui autorise, comme illustré figure 10, le levier 9 à pivoter jusque dans sa deuxième position (qui correspond en usage normal à l'ouverture du couvercle) sans que la pièce de liaison 16 ne bouge, puisqu'elle est quant à elle bloquée par le cliquet 15B du verrou 15. Le levier 9 est monté à rotation autour du moyeu par l'intermédiaire d'une bague 99 entourant de façon ajustée le moyeu 16 pour que la face interne de la bague 99 puisse, pendant toute la course du levier 9 de sa première vers sa deuxième position, maintenir le pêne 26 rétracté au sein de son logement ménagé dans la pièce de liaison 16. Grâce à cette fonction de débrayage, l'utilisateur n'a exercé aucun effort intempestif sur les pièces de sécurité. Il est en outre avantageusement prévenu du caractère anormal de la situation grâce à des dentelures (ou autres irrégularités géométriques) ménagées sur la surface interne de la bague 99 tournant autour du moyeu 16, dentelures contre lesquelles vient en contact le pêne 26, ce qui produit une sensation et/ou un bruit caractéristique(s) d'une situation anormale. La fonction de débrayage assure ainsi une fonction de limitation d'effort, qui permet de préserver les pièces de sécurité. Le seuil de déclenchement de cette limitation d'effort est simplement fonction de la raideur du ressort de rappel 27 du pêne 26. L'utilisateur, lorsqu'il se rend compte qu'il ne peut pas ouvrir l'appareil 1, peut ensuite simplement le réarmer en ramenant le levier 9 dans sa première position, par rotation antihoraire (relativement à la représentation de la figure 10), pour se retrouver dans la configuration verrouillée de la figure 8. Une fois le cycle de cuisson terminé, la pression interne va redescendre jusqu'en deçà du niveau prédéterminé de sécurité, ce qui va alors occasionner la chute du doigt de sécurité 130 dans sa position basse. L'utilisateur pourra alors déverrouiller l'appareil 1 en exerçant simplement un effort de mise en rotation, dans le sens horaire (par rapport à la représentation de la figure 8) sur le levier 9, de sa première vers sa deuxième position. En retour, le levier 9 va entraîner en rotation, par l'intermédiaire de l'accouplement pêne 26 / gâche 9A, la pièce de liaison 16, qui elle-même va automatiquement repousser, par effet de came, le cliquet 15B, et donc le verrou 15 hors de sa position de verrouillage, en maintenant continûment le verrou 15 hors de sa position de verrouillage jusqu'à l'atteinte de la configuration déverrouillée de la figure 6.

Le deuxième mode de réalisation des figures 11 à 20 repose sur des principes généraux analogues à ceux mis en œuvre par le premier mode de réalisation, avec en particulier le recours à un dispositif de transmission débrayable. Par conséquent, la description qui précède reste valable, sauf indications contraires dans ce qui suit, pour le deuxième mode de réalisation (et inversement). Selon ce deuxième mode de réalisation illustré aux figures 11 à 20, le couvercle 3 est relié à l'extrémité interne du levier 9 par une pièce rigide de transmission 12 dont une extrémité inférieure est fixée au centre du couvercle 3 et une extrémité supérieure est fixée à pivotement au levier 9, au moyen d'un tourillon 12A qui tourne dans un logement complémentaire 90 ménagé dans la pièce monobloc formant le levier 9. Une platine de guidage 28, solidaire de la traverse d'accostage 6, délimite au moins une, et en l'occurrence deux, rainures recevant chacune une extrémité libre du tourillon 9A, pour guider ce dernier en translation verticale entre une position basse et haute de butée. L'extrémité interne du levier 9 comprend une première came 91 qui, en prenant appui contre la traverse d'accostage 6, directement ou par l'intermédiaire d'une semelle appropriée solidaire de la traverse d'accostage 6, permet de régler la position du tourillon 12A dans la glissière rainure 28, et donc la position du couvercle 3 relativement à la traverse d'accostage 6. Selon ce deuxième mode de réalisation des figures 11 à 20, le levier 9 comprend également une deuxième came 92 conçue pour repousser le verrou 15 hors de sa position de verrouillage lorsque le levier 9 se déplace de sa première position (fermeture du couvercle 3) vers sa deuxième position (ouverture du couvercle 3). Selon ce deuxième mode de réalisation des figures 11 à 20, ledit premier élément d'accouplement comprend ladite deuxième came 92 qui est portée par l'organe de commande manuel 5 (lequel est en l'espèce formé par le levier 9) tandis que ledit deuxième élément d'accouplement comprend quant à lui une première butée 29 portée par le verrou 15. Ladite première butée 29 est mobile entre une position déployée de rappel élastique correspondant à la configuration active évoquée précédemment en relation avec le premier mode de réalisation, et une position rétractée correspondant à ladite configuration inactive. Selon ce deuxième mode de réalisation des figures 11 à 20, la pièce de liaison 16 est formée en l'espèce par le tourillon 12A, le verrou 15 retenant, en position de verrouillage, ledit tourillon 12A, au moyen d'une patte 15C adaptée, dans une position correspondant à la position de fermeture du couvercle 3, sans pour autant interdire à l'organe de commande manuel 5 de se déplacer de sa première position vers sa deuxième position. Enfin, contrairement à la variante des figures 1 à 10, l'appareil 1 selon le mode de réalisation des figures 11 à 20 comprend un organe de rappel élastique (ressort 31) qui tend en permanence à rappeler le verrou 15 dans sa position de déverrouillage.

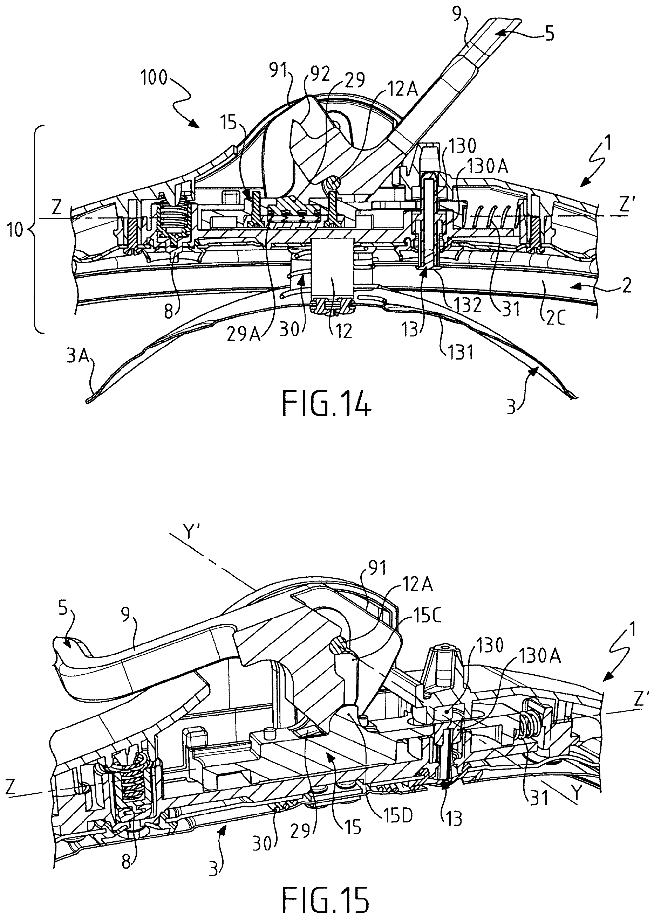

Le fonctionnement de l'appareil 1 conforme à ce deuxième mode de réalisation des figures 11 à 20 est pour l'essentiel le suivant. L'appareil 1 se trouve initialement en configuration déverrouillée, avec la traverse d'accostage 6 disposée sur le rebord de la cuve 2 et le couvercle 3 inséré dans la cuve 2, sous le rebord rentrant 2C. Le verrou 15 se trouve alors dans sa position de déverrouillage, dans laquelle il est rappelé par le ressort 31. L'utilisateur entraîne alors le levier 9 (qui présente une forme d'anse) de sa deuxième vers sa première position, ce qui a pour effet, par interaction entre une troisième came 93 portée par le levier 9 et une butée correspondante 15D solidaire du verrou 15, de repousser ce dernier vers et dans sa position de verrouillage, à l'encontre de la force de rappel exercée par le ressort 31. L'appareil 1 se trouve alors dans sa configuration verrouillée illustrée figure 15. Sous l'effet de l'augmentation de la pression interne, le doigt de sécurité 130 va ensuite gagner sa position haute dès l'atteinte du niveau prédéterminé de sécurité, bloquant ainsi le verrou 15 dans sa position de verrouillage, position dans laquelle la patte 15C se trouve directement sous le tourillon 12A reliant le couvercle 3 au levier 9. Si l'utilisateur exerce par erreur un effort d'ouverture sur le levier 9 alors que l'appareil 1 est toujours sous pression et que le doigt 130 est donc en position haute, la deuxième came 92 exerce sur la première butée 29 un effort qui va repousser la première butée 29 dans une position rétractée, à l'encontre de la force de rappel élastique exercée par les ressorts 29A sur la première butée 29 pour la maintenir en position déployée. La butée 29 va alors s'effacer, autorisant ainsi le levier 9 à quitter sa première position pour rejoindre sa deuxième position. Ce déplacement du levier 9 de sa première vers sa deuxième position n'occasionne toutefois aucune ouverture du couvercle 3, puisque ce dernier est maintenu dans sa position de fermeture par la patte 15C (le verrou 15 étant lui-même immobilisé en position par le doigt de sécurité 130) qui supporte le tourillon 12A et l'empêche de descendre sous l'effet du poids du couvercle 3 et de la force de rappel exercée par le ressort 30. Ainsi débrayé, le dispositif de transmission permet d'éviter toute transmission d'efforts intempestifs aux pièces de sécurité. L'utilisateur peut ensuite réarmer l'appareil 1 en ramenant le levier 9 dans sa première position (correspondant au verrouillage en fonctionnement normal non débrayé). Une fois le cycle de cuisson terminé, le doigt de sécurité 130 redescend en position basse et l'utilisateur peut alors déplacer le levier 9 de sa première vers sa deuxième position. Ce déplacement de déverrouillage va entraîner le déplacement concomitant du verrou 15 hors de sa position de verrouillage vers sa position de déverrouillage, sous l'effet conjugué de la force de rappel exercée par le ressort 31 et de l'action de la deuxième came 92 sur la butée 29. L'appareil 1 peut alors atteindre la configuration déverrouillée de la figure 14.

L'invention n'est toutefois pas limitée à la mise en œuvre d'un dispositif de transmission débrayable.

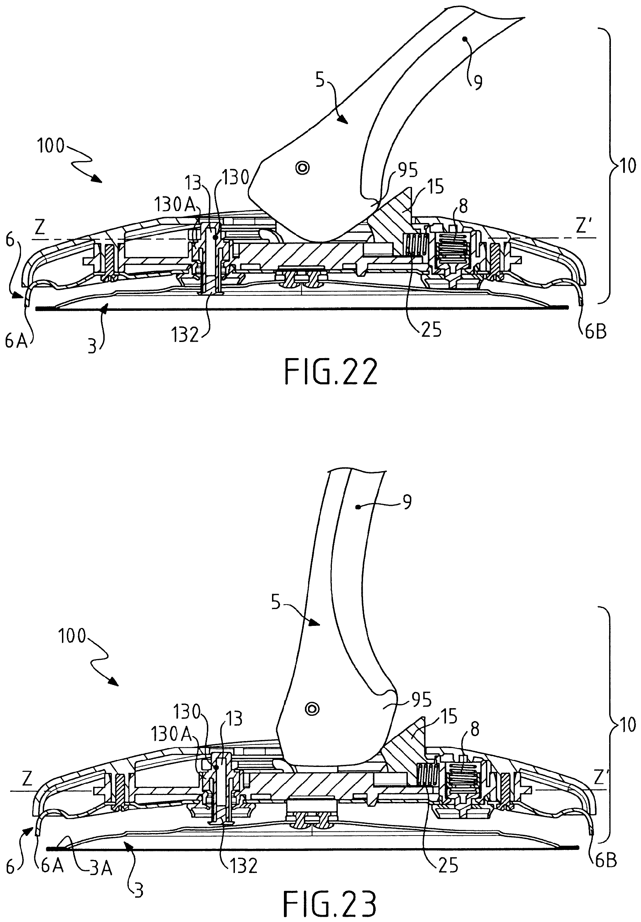

Ainsi, conformément au troisième mode de réalisation des figures 21 à 25, le verrou 15 est rappelé en permanence, par le ressort 25, dans sa position verrouillée, dans laquelle il interagit avec une conformation complémentaire du levier 9 pour bloquer ce dernier dans sa première position correspondant au verrouillage du couvercle. Le doigt de sécurité 130 peut atteindre, lorsque le niveau de sécurité prédéterminé de pression est atteint ou dépassé, sa position haute dans laquelle il bloque le verrou 15 dans sa position de verrouillage. Le verrou 15 bloque quant à lui le levier 9 dans sa première position correspondant à la fermeture du couvercle (figure 21). Si l'utilisateur cherche à ouvrir malgré tout l'appareil 1 en tentant de faire tourner le levier 9 selon un sens antihoraire (en référence à la représentation de la figure 21) il en sera empêché par le verrou 15 qui immobilise en position le levier 9. Une fois le niveau de pression interne redescendue en deçà du niveau prédéterminé de sécurité, l'utilisateur peut exercer sur le levier 9 un effort de déplacement dans le sens antihoraire, de sorte qu'une came 95 portée par le levier 9 va venir repousser le verrou 15 hors de sa position de verrouillage, en réponse au déplacement de l'organe de commande manuel 5 de sa première vers sa deuxième position, le moyen de sécurité à l'ouverture 13 étant désactivé. L'organe de commande manuel 5 peut alors librement atteindre sa deuxième position (illustrée figure 23) en passant par une position intermédiaire illustrée figure 22. Ce troisième mode de réalisation ne permet donc pas de débrayage, de sorte qu'il s'avère de ce point de vue moins avantageux que les deux autres variantes décrites précédemment. Toutefois, il met lui aussi en œuvre une gestuelle d'ouverture particulièrement simplifiée, tout en permettant d'éviter que d'éventuels efforts intempestifs de déverrouillage exercé sur le levier 9 ne viennent directement solliciter le doigt de sécurité 130. De tels efforts intempestifs sont en effet repris par le verrou 15, évitant ainsi de solliciter en cisaillement et/ou en arrachement le doigt de sécurité 130.

Bien entendu, d'autres modes de réalisation sont parfaitement envisageables, reposant par exemple sur la combinaison de différentes caractéristiques des trois modes de réalisation décrits ci-avant, à titre purement illustratif et non limitatif.

### POSSIBILITE D'APPLICATION INDUSTRIELLE

L'invention trouve son application industrielle dans la conception, la fabrication et l'utilisation d'appareils de cuisson d'aliments sous pression.

## Revendications

1. Appareil de cuisson sous pression (1) à couvercle rentrant comprenant au moins :
- une cuve (2) et un couvercle (3) qui est conçu pour être rapporté dans la cuve (2) avec une faculté de mobilité entre au moins d'une part une position de fermeture dans laquelle il forme avec la cuve une enceinte de cuisson capable de monter en pression, et d'autre part une position d'ouverture autorisant la communication de l'intérieur de l'enceinte avec l'extérieur,
- un organe de commande manuel (5) du déplacement du couvercle (3), mobile entre au moins des première et deuxième positions correspondant respectivement aux positions de fermeture et d'ouverture du couvercle (3),
- un verrou (15) mobile susceptible d'occuper une position de verrouillage empêchant le couvercle (3) de gagner sa position d'ouverture, et une position de déverrouillage autorisant le couvercle à gagner sa position d'ouverture,
- un moyen de sécurité à l'ouverture (13) activable/désactivable automatiquement en réponse au niveau de pression dans l'enceinte, ledit moyen de sécurité à l'ouverture interdisant, lorsqu'il est activé, au verrou (15) de gagner sa position de déverrouillage, et autorisant, lorsqu'il est désactivé, le verrou (15) à quitter sa position de verrouillage,
**caractérisé en ce que** l'organe de commande manuel (5) est lié au verrou (15) par un dispositif de transmission conçu pour entraîner le verrou (15) hors de sa position de verrouillage en réponse au déplacement de l'organe de commande manuel (5) de sa première vers sa deuxième position alors que le moyen de sécurité à l'ouverture (13) est désactivé.

2. Appareil (1) selon la revendication précédente **caractérisé en ce que** ledit dispositif de transmission est débrayable pour autoriser le déplacement de l'organe de commande manuel (5) de sa première vers sa deuxième position lorsque le verrou (15) est en position de verrouillage et que le moyen de sécurité à l'ouverture (13) est activé.

3. Appareil (1) selon la revendication précédente **caractérisé en ce que** ledit dispositif de transmission comprend un premier élément d'accouplement relié à l'organe de commande manuel (5) et un deuxième élément d'accouplement relié au verrou (15), l'un au moins desdits premier et deuxième élément d'accouplement évoluant entre une configuration active permettant un interengagement desdits premier et deuxième organes d'accouplement pour accoupler mécaniquement lesdits organe de commande manuel (5) et verrou (15), et une configuration inactive empêchant l'interengagement desdits premier et deuxième éléments pour désaccoupler mécaniquement lesdits organe de commande manuel (5) et verrou (15).

4. Appareil (1) selon la revendication précédente **caractérisé en ce que** ledit premier élément d'accouplement comprend une deuxième came (92) portée par l'organe de commande manuel (5) tandis que le deuxième élément d'accouplement comprend une première butée (29) portée par le verrou (15), ladite première butée (29) étant mobile entre une position déployée de rappel élastique correspondant à la configuration active, et une position rétractée correspondant à la configuration inactive.

5. Appareil (1) selon l'une quelconque des revendications précédentes **caractérisé en ce que** ledit dispositif de transmission comprend au moins une pièce de liaison (16, 12A) mobile relativement au verrou (15), par l'intermédiaire au moins de laquelle le couvercle (3) est relié à l'organe de commande manuel (5), ledit organe de commande manuel (5) étant monté avec une faculté de mobilité relativement à ladite pièce de liaison (16, 12A), ledit verrou (15) retenant, en position de verrouillage, ladite pièce de liaison (15, 12A) dans une position correspondant à la position de fermeture du couvercle (3).

6. Appareil (1) selon les revendications 3 et 5 **caractérisé en ce que** ledit premier élément d'accouplement est formé par une gâche (9A) portée par l'organe de commande manuel (5) tandis que le deuxième élément d'accouplement est formé par un pêne (26) portée par ladite pièce de liaison (16) et monté mobile relativement à cette dernière entre une position déployée de rappel élastique correspondant à la configuration active, dans laquelle le pêne (26) peut s'insérer dans ladite gâche (9A) pour inhiber la faculté de déplacement de l'organe de commande manuel (5) relativement à la pièce de liaison (16), et une position rétractée correspondant à la configuration inactive, dans laquelle l'organe de commande manuel (5) peut se déplacer relativement à la pièce de liaison (16).

7. Appareil (1) selon l'une quelconque des revendications 5 et 6 **caractérisé en ce qu'**il comprend une biellette (20) qui relie ladite pièce de liaison (16) au couvercle pour transformer le déplacement de la pièce de liaison (16) en déplacement du couvercle (3).

8. Appareil (1) selon l'une quelconque des revendications 5 à 7 **caractérisé en ce que** ladite pièce de liaison (16) est pourvue d'une came d'entraînement (23) coopérant avec le verrou (15) pour entraîner ce dernier hors de sa position de verrouillage en réponse au déplacement de l'organe de commande manuel (5) de sa première vers sa deuxième position alors que le moyen de sécurité à l'ouverture (13) est désactivé.

9. Appareil (1) selon la revendication 8 **caractérisé en ce que** ledit verrou (15) est pourvu d'un cliquet (15B) tandis que ladite came d'entraînement (23) est pourvue d'une conformation de blocage (24) avec laquelle le cliquet (15B) est destiné à coopérer en interverrouillage lorsque l'organe de commande manuel (5) atteint sa première position afin de retenir ladite pièce de liaison (16) dans sa position correspondant à la position de fermeture du couvercle (3).

10. Appareil (1) selon l'une des revendications 5 à 9 **caractérisé en ce qu'**il comprend une traverse d'accostage (6) qui est destinée à être rapportée sur la cuve (2), et sur laquelle est embarquée une platine (32), ladite pièce de liaison (16) formant un moyeu monté à rotation relativement à la platine (32).

11. Appareil (1) selon l'une des revendications précédentes **caractérisé en ce qu'**il comprend un organe de rappel élastique (25) qui tend en permanence à rappeler le verrou (15) dans sa position de verrouillage.

12. Appareil (1) selon l'une des revendications précédentes **caractérisé en ce que** le verrou (15) coopère avec le moyen de sécurité à l'ouverture (13) pour que le verrou (15), lorsqu'il se trouve en dehors de sa position de déverrouillage, empêche le moyen de sécurité à l'ouverture (13) de passer de son état désactivé à son état activé.

13. Appareil (1) selon l'une quelconque des revendications précédentes **caractérisé en ce que** ledit moyen de sécurité à l'ouverture (13) comprend un doigt de sécurité (130) sensible à la pression régnant à l'intérieur de l'enceinte, ledit doigt de sécurité (130) étant mobile entre d'une part une position basse dans laquelle il est rappelé lorsque le niveau de pression dans l'enceinte est inférieur à un niveau prédéterminé, et d'autre part une position haute qu'il occupe lorsque le niveau de pression dans l'enceinte atteint ou dépasse le niveau prédéterminé.

14. Appareil (1) selon l'une quelconque des revendications précédentes **caractérisé en ce que** l'organe de commande manuel (5) coopère avec le verrou (15) pour maintenir ce dernier en dehors de sa position de verrouillage tant que l'organe de commande manuel (5) n'a pas atteint sa première position.

15. Appareil (1) selon l'une des revendications 1 à 14 **caractérisé en ce que** la cuve (2) comprend une paroi latérale (2B) à partir de laquelle s'étend de façon centripète un rebord rentrant (2C) présentant une face interne, le couvercle (3) étant un couvercle déformable susceptible d'évoluer entre une configuration géométrique de repos permettant l'introduction du couvercle (3) dans la cuve (2) sous la face interne et une configuration géométrique déformée permettant au couvercle (3) de venir en contact sensiblement étanche contre ladite face interne, le passage d'une configuration à l'autre étant commandé par ledit organe de commande manuel (5).

## Patentansprüche

1. Druckgargerät (1) mit einem klappbaren Deckel, mit zumindest:
- einem Behälter (2) und einem Deckel (3), der dazu bestimmt ist, so an den Behälter (2) angesetzt zu werden, dass er wenigstens zwischen einer geschlossenen Position einerseits, in der er mit dem Behälter einen mit einem erhöhten Druck beaufschlagbaren Garraum bildet, und einer offenen Position andererseits, die eine Verbindung zwischen dem Inneren des Garraums und der Umgebung ermöglicht, beweglich ist,
- einem manuellen Bedienelement (5) für die Verlagerung des Deckels (3), das zwischen mindestens einer ersten und einer zweiten Position beweglich ist, die jeweils der geschlossenen und der geöffneten Position des Deckels (3) entsprechen,
- einer beweglichen Verriegelung (15), die eine Verriegelungsposition, in der eine Bewegung des Deckels (3) in seine offene Position verhindert ist, und eine Entriegelungsposition einzunehmen vermag, in der der Deckel in seine geöffnete Position beweglich ist,
- einem Öffnungssicherheitsmittel (13), das in Reaktion auf das Druckniveau in dem Behälter automatisch aktivierbar/deaktivierbar ist, wobei das Öffnungssicherheitsmittel bei Aktivierung verhindert, dass sich die Verriegelung (15) in ihre entriegelte Position bewegt, und bei Deaktivierung der Verriegelung (15) ermöglicht, sich aus ihrer verriegelten Position heraus zu bewegen,
**dadurch gekennzeichnet, dass** das manuelle Bedienelement (5) mit der Verriegelung (15) über eine Übertragungseinrichtung verbunden ist, die mit der Verriegelung (15) verbunden ist, die dazu bestimmt ist, die Verriegelung (15) in Reaktion auf die Bewegung des manuellen Bedienelements (5) von ihrer ersten in ihre zweite Position aus ihrer Verriegelungsposition herauszubewegen, während das Öffnungssicherungsmittel (13) deaktiviert ist.

2. Gerät (1) nach dem vorhergehenden Anspruch, **dadurch gekennzeichnet, dass** die Übertragungseinrichtung zur Ermöglichung der Bewegung des manuellen Bedienelements (5) aus seiner ersten in seine zweite Position auskoppelbar ist, wenn sich die Verriegelung (15) in Verriegelungsposition befindet und das Öffnungssicherungsmittel (13) aktiviert ist.

3. Gerät (1) nach dem vorhergehenden Anspruch, **dadurch gekennzeichnet, dass** die Übertragungseinrichtung ein mit dem manuellen Bedienelement (5) verbundenes erstes Kupplungselement und ein mit der Verriegelung (15) verbundenes zweites Kupplungselement umfasst, wobei wenigstens eines von den ersten und zweiten Kopplungselementen zwischen einer aktiven Konfiguration, die ein Ineinandergreifen des ersten und zweiten Kopplungselements zum mechanischen Koppeln des manuellen Bedienelements (5) und der Verriegelung (15) ermöglicht, und einer inaktiven Konfiguration, die ein Ineinandergreifen des ersten und zweiten Elements zum mechanischen Entkoppeln des manuellen Bedienelements (5) und der Verriegelung (15) verhindert, wechselt.

4. Gerät (1) nach dem vorhergehenden Anspruch, **dadurch gekennzeichnet, dass** das erste Kupplungselement einen zweiten Nocken (92) aufweist, der von dem manuellen Bedienelement (5) getragen ist, während das zweite Kupplungselement einen ersten Anschlag (29) aufweist, der von der Verriegelung (15) getragen ist, wobei der erste Anschlag (29) zwischen einer ausgefahrenen elastischen Rückholposition, die der aktiven Konfiguration entspricht, und einer eingezogenen Position, die der inaktiven Konfiguration entspricht, beweglich ist.

5. Gerät (1) nach einem der vorhergehenden Ansprüche, **dadurch gekennzeichnet, dass** die Übertragungseinrichtung mindestens ein relativ zur Verriegelung (15) bewegliches Verbindungsstück (16, 12A) aufweist, über das zumindest der Deckel (3) mit dem manuellen Bedienelement (5) verbunden ist, wobei das manuelle Bedienelement (5) relativ zu dem Verbindungsstück (16, 12A) beweglich gelagert ist, wobei die Verriegelung (15) in einer Verriegelungsposition das Verbindungsstück (15, 12A) in einer Position hält, die der geschlossenen Position des Deckels (3) entspricht.

6. Gerät (1) nach den Ansprüchen 3 und 5, **dadurch gekennzeichnet, dass** das erste Kupplungselement durch einen vom manuellen Bedienelement (5) getragenen Riegel (9A) gebildet wird, während das zweite Kupplungselement durch einen vom Verbindungsstück (16) getragenen Bolzen (26) gebildet wird, der relativ zu diesem zwischen einer der aktiven Konfiguration entsprechenden, ausgefahrenen elastischen Rückstellposition, in der der Bolzen (26) in den Anschlag (9A) einführbar ist um die Beweglichkeit der Handsteuerung (5) relativ zu dem Verbindungsstück (16) zu verhindern, und einer der inaktiven Konfiguration entsprechenden, eingezogenen Position, in der das manuelle Bedienelement (5) relativ zu dem Verbindungsstück (16) verlagerbar ist, beweglich ist.

7. Gerät (1) nach einem der Ansprüche 5 und 6, **dadurch gekennzeichnet, dass** es eine Verbindungsstange (20) aufweist, die das Verbindungsstück (16) mit dem Deckel verbindet, um die Verschiebung des Verbindungsstücks (16) in eine Verschiebung des Deckels (3) zu transformieren.

8. Gerät (1) nach einem der Ansprüche 5 bis 7, **dadurch gekennzeichnet, dass** das Verbindungsstück (16) mit einem Antriebsnocken (23) versehen ist, der mit der Verriegelung (15) zusammenwirkt, um diese als Reaktion auf die Verschiebung des manuellen Bedienelements (5) von seiner ersten in seine zweite Position aus seiner Verriegelungsposition herauszutreiben, während das Öffnungssicherungsmittel (13) deaktiviert ist.

9. Gerät (1) nach Anspruch 8, **dadurch gekennzeichnet, dass** die Verriegelung (15) mit einer Sperrklinke (15B) versehen ist, während der Antriebsnocken (23) mit einer Verriegelungsformation (24) versehen ist, die dafür eingerichtet ist, mit der Sperrklinke (15B) beim Verriegeln zusammenzuwirken, wenn das manuelle Bedienelement (5) seine erste Position erreicht, um das Verbindungsstück (16) in seiner der geschlossenen Position des Deckels (3) entsprechenden Position zu halten.

10. Gerät (1) nach einem der Ansprüche 5 bis 9, **dadurch gekennzeichnet, dass** es eine Andocktraverse (6) aufweist, die dazu bestimmt ist, am Behälter (2) befestigt zu werden, und auf die eine Platte (32) aufgesetzt ist, wobei das Verbindungsstück (16) eine Nabe bildet, die gegenüber der Platte (32) drehbar gelagert ist.

11. Gerät (1) nach einem der vorhergehenden Ansprüche, **dadurch gekennzeichnet, dass** es ein elastisches Rückstellelement (25) aufweist, das permanent dazu neigt, die Verriegelung (15) in ihre Verriegelungsposition zurückzustellen.

12. Gerät (1) nach einem der vorhergehenden Ansprüche, **dadurch gekennzeichnet, dass** die Verriegelung (15) mit dem Öffnungssicherheitsmittel (13) derart zusammenwirkt, dass die Verriegelung (15), wenn sie sich außerhalb ihrer Entriegelungsposition befindet, verhindert, dass das Öffnungssicherheitsmittel (13) von seinem deaktivierten Zustand in seinen aktivierten Zustand übergeht.

13. Gerät (1) nach einem der vorhergehenden Ansprüche, **dadurch gekennzeichnet, dass** die Öffnungssicherheitseinrichtung (13) einen Sicherheitsfinger (130) aufweist, der auf den im Inneren des Behälters herrschenden Druck reagiert, wobei der Sicherheitsfinger (130) zwischen einer unteren Position einerseits, in die er zurückgestellt wird, wenn das Druckniveau im Behälter unter einer vorbestimmten Schwelle liegt, und einer oberen Position andererseits, die er einnimmt, wenn der Druckpegel im Gehäuse die vorbestimmte Schwelle erreicht oder überschreitet, beweglich ist.

14. Gerät (1) nach einem der vorhergehenden Ansprüche, **dadurch gekennzeichnet, dass** das manuelle Bedienelement (5) mit der Verriegelung (15) zusammenwirkt, um letztere aus ihrer Verriegelungsposition herauszuhalten, bis das manuelle Bedienelement (5) seine erste Position erreicht hat.

15. Gerät (1) nach einem der Ansprüche 1 bis 14, **dadurch gekennzeichnet, dass** der Behälter (2) eine Seitenwand (2B) aufweist, von der sich ein eingezogener Flansch (2C) mit einer Innenfläche zentripetal erstreckt, wobei der Deckel (3) ein verformbarer Deckel ist, der in der Lage ist, zwischen einer geometrischen Ruhekonfiguration, die es dem Deckel (3) erlaubt, in den Behälter (2) unterhalb der Innenfläche eingeführt zu werden, und einer verformten geometrischen Konfiguration, die es dem Deckel (3) erlaubt, in im Wesentlichen dichten Kontakt gegen die Innenfläche zu kommen, zu wechseln, wobei der Wechsel von einer Konfiguration zur anderen durch das manuelle Bedienelement (5) gesteuert wird.

## Claims

1. A pressure cooking appliance (1) having an internally-fitted lid and comprising at least:
- a vessel (2) and a lid (3) designed to be fitted in the vessel (2) with an ability to move between at least firstly a closed position in which it co-operates with the vessel to form a cooking enclosure capable of rising in pressure, and secondly an opening position allowing communication between the inside of the enclosure with the outside;
- a manual control member (5) for moving the lid (3), the control member being movable between at least first and second positions that correspond respectively to the closed position and to the opening position of the lid (3);
- a movable latch (15) suitable for occupying a latching position preventing the lid (3) from reaching its opening position and an unlatching position allowing the lid to reach its opening position; and
- opening safety means (13) that are automatically activatable/deactivatable in response to the pressure level inside the enclosure, said opening safety means, when activated, preventing the latch (15) from reaching its unlatching position, and when it is deactivated, allowing the latch (15) to leave its latching position;
the appliance being **characterized in that** the manual control member (5) is connected to the latch (15) by a transmission device designed to drive the latch (15) away from its latching position in response to the manual control member (5) moving from its first position towards its second position while the opening safety means (13) are deactivated.

2. An appliance (1) according to the preceding claim, **characterized in that** said transmission device is declutchable so as to allow the manual control member (5) to move from its first position towards its second position while the latch (15) is in the latching position and the opening safety means (13) are activated.

3. An appliance (1) according to the preceding claim, **characterized in that** the transmission device comprises a first coupling element connected to the manual control member (5) and a second coupling element connected to the latch (15), at least one of said first and second coupling elements moving between an active configuration enabling said first and second coupling members to inter-engage to couple said manual control member (5) and said latch (15) mechanically together, and an inactive configuration preventing said first and second elements from interengaging to decouple said manual control member (5) and said latch (15) mechanically from each other.

4. An appliance (1) according to the preceding claim, **characterized in that** said first coupling element includes a second cam (92) carried by the manual control member (5), while the second coupling element comprises a first abutment (29) carried by the latch (15), said first abutment (29) being movable between a deployed resilient return position corresponding to the active configuration, and a retracted position corresponding to the inactive configuration.

5. An appliance (1) according to any preceding claim, **characterized in that** said transmission device comprises at least one connection part (16, 12A) that is movable relative to the latch (15), the lid (3) being connected to the manual control member (5) at least via the connection part, said manual control member (5) being mounted to have an ability to move relative to said connection part (16, 12A), said latch (15), in the latching position, retaining said connection part (15, 12A) in a position corresponding to the closed position of the lid (3).

6. An appliance (1) according to claims 3 and 5, **characterized in that** said first coupling element is formed by a catch (9A) carried by the manual control member (5), while the second coupling element is formed by a bolt (26) carried by said connection part (16) and mounted to move relative thereto between a deployed resilient return position corresponding to the active configuration in which the bolt (26) can become inserted in said catch (9A) in order to inhibit the ability of the manual control member (5) to move relative to the connection part (16), and a retracted position corresponding to the inactive configuration, in which the manual control member (5) can move relative to the connection part (16).

7. An appliance (1) according to claim 5 or claim 6, **characterized in that** it includes a connecting rod (20) connecting said connection part (16) to the lid in order to transform the movement of the connection part (16) into movement of the lid (3).

8. An appliance (1) according to any one of claims 5 to 7, **characterized in that** said connection part (16) is provided with a drive cam (23) co-operating with the latch (15) to drive the latch away from its latching position in response to movement of the manual control member (5) from its first position towards its second position while the opening safety means (13) are deactivated.

9. An appliance (1) according to claim 8, **characterized in that** said latch (15) is provided with a pawl (15B) and said drive cam (23) is provided with a blocking shape (24) with which the pawl (15B) is designed to co-operate in interlocking manner when the manual control member (5) reaches its first position in order to hold said connection part (16) in its position corresponding to the closed position of the lid (3).

10. An appliance (1) according to any one of claims 5 to 9, **characterized in that** it includes a docking crossbar (6) that is designed to be fitted onto the vessel (2), and carrying a plate (32), said connection part (16) forming a hub mounted to pivot relative to the plate (32).

11. An appliance (1) according to any preceding claim, **characterized in that** it includes a resilient return member (25) permanently urging the latch (15) into its latching position.

12. An appliance (1) according to any preceding claim, **characterized in that** the latch (15) co-operates with the opening safety means (13) so that the latch (15), when away from its unlatching position, prevents the opening safety means (13) from passing from its deactivated state to its activated state.

13. An appliance (1) according to any preceding claim, **characterized in that** said opening safety means (13) comprise a safety finger (130) responsive to the pressure that exists inside the enclosure, said safety finger (130) being movable between firstly a low position into which it is returned when the pressure level inside the enclosure is less than a predetermined level, and secondly a high position that it occupies when the pressure level inside the enclosure reaches or exceeds the predetermined level.

14. An appliance (1) according to any preceding claim, **characterized in that** the manual control member (5) co-operates with the latch (15) to hold the latch away from its latching position so long as the manual control member (5) has not reached its first position.

15. An appliance (1) according to any one of claims 1 to 14, **characterized in that** the vessel (2) comprises a side wall (2B) from which a reentrant rim (2C) presenting an inside face extends inwardly, the lid (3) being a deformable lid suitable for varying between a rest geometrical configuration enabling the lid (3) to be inserted into the vessel (2) under the inside face, and a deformed geometrical configuration enabling the lid (3) to come in substantially sealed contact against said inside face, with passage from one configuration to the other being controlled by said manual control member (5).
